(19) Europäisches Patentamt
European Patent Office
Office européen des brevets

(11) EP 1 586 589 A1

(12) EUROPEAN PATENT APPLICATION
published in accordance with Art. 158(3) EPC

(43) Date of publication:
**19.10.2005 Bulletin 2005/42**

(21) Application number: **03815440.7**

(22) Date of filing: **22.01.2003**

(51) Int Cl.7: **C08F 4/658**, C08F 10/00, C08F 297/08

(86) International application number:
**PCT/JP2003/000524**

(87) International publication number:
**WO 2004/065429 (05.08.2004 Gazette 2004/32)**

(84) Designated Contracting States:
**AT BE BG CH CY CZ DE DK EE ES FI FR GB GR HU IE IT LI LU MC NL PT SE SI SK TR**

(71) Applicant: **IDEMITSU KOSAN CO., LTD.**
**Tokyo 100-8321 (JP)**

(72) Inventors:
- **YABUNOUCHI, Nobuhiro**
  **Ichihara-shi, Chiba 299-0107 (JP)**
- **SADASHIMA, Takanori**
  **Ichihara-shi, Chiba 299-0107 (JP)**

(74) Representative:
**Gille Hrabal Struck Neidlein Prop Roos**
**Brucknerstrasse 20**
**40593 Düsseldorf (DE)**

(54) **CATALYSTS FOR POLYMERIZING OLEFINS AND PROCESS FOR PRODUCING OLEFIN POLYMER**

(57) A solid catalyst component for olefin polymerization obtained by reacting the following compounds (i), (ii) and (iv); or (i), (ii), (iii) and (iv):

(i) a halogen-containing titanium compound;
(ii) an alkoxy-containing magnesium compound obtained by reacting metal magnesium, an alcohol and a halogen and/or a halogen-containing compound containing at least 0.0001 gram atom of halogen atoms per mol of the metal magnesium;
(iii) a halogen-containing silicon compound; and
(iv) an electron-donating compound represented by the following general formula (I):

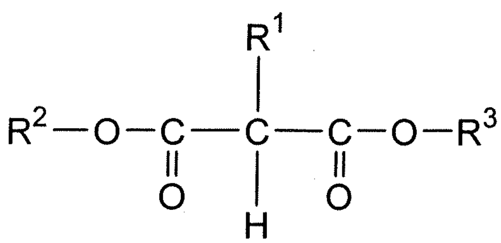
...... (I)

wherein $R^1$ represents a linear or branched alkyl group having 1 or more carbon atoms; and $R^2$ and $R^3$ independently represent a linear or branched $C_{1-20}$ alkyl group.

EP 1 586 589 A1

Fig. 1

[A] Solid catalyst component

(i) Halogen-containing Ti compound

(ii) Alkoxy-containing Mg compound

(iii) Halogen-containing Si compound

(iv) Electron-donating compound

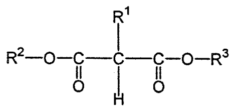

...... (I)

wherein $R^1$ represents a linear or branched alkyl group having 1 or more carbon atoms; and $R^2$ and $R^3$ independently represent a linear or branched $C_{1-20}$ alkyl group

[B] Organic Al compound

[C] Electron-donating compound

Olefin polymer

## Description

Technical Field

The invention relates to a catalyst for olefin polymerization used for producing a homopolymer or copolymer of an α-olefin; and a method of producing an olefin polymer.

Technical Background

An olefin polymer is generally polymerized by using a Ziegler-Natta catalyst containing a titanium compound and organic aluminum compound. For example, for the production of polypropylene which is an olefin polymer, isotactic polypropylene is obtained with the use of a solid catalyst component, an organic aluminum compound and an organic silicon compound containing an alkoxy group. The solid catalyst component is mainly made of titanium, magnesium, chlorine and electron-donating compound. The organic aluminum compound acts as a co-catalyst. The silicon compound acts as a stereoregularity-enhancing agent. At present, many attempts have been made to improve a catalyst activity at the time of polymerization, stereoregularity of an olefin polymer and morphology of polymer powder for stable production.

For example, in order to improve the morphology of an olefin polymer such as particle diameter and shape, JP-AS63-280707 discloses the method where a magnesium compound is supported on an inorganic oxide such as silica; and JP-A-S58-000811 discloses the method where there is used a magnesium compound that has been dissolved in a solvent such as alcohols and thereafter precipitated again.

However these methods have shortcomings that their process is extremely complicated since the supporting, dissolving, precipitating or the like of a magnesium compound are necessary; and the performance and stability of catalyst are inferior. Further these methods have shortcomings that the catalyst activity at the time of polymerization, and stereoregularity of an olefin polymer are insufficient.

In order to overcome these shortcomings, JP-A-H02-413883 discloses the method where a reaction product of metal magnesium, alcohol and a certain amount of halogen is used as a support of a catalyst; and JP-B-H07-25822 discloses the method of producing an olefin polymer with the use of a Ziegler-Natta catalyst containing a solid catalyst component that is obtained by the following. An ester of organic acid is added to a reaction product of alkoxymagnesium, haloganating agent and alkoxytitanium and the mixture is further reacted with a halogenated titanium to obtain the solid catalyst component.

However, in these methods, the catalyst activity at the time of polymerization, and stereoregularity of an olefin polymer are still insufficient.

JP-A-H11-269218 discloses a solid catalyst component for olefin polymerization obtained by the following. A magnesium compound is brought into contact with a titanium compound in the presence of an electron-donating compound at 120°C to 150°C and the resultant product is washed with an inert solvent at 100°C to 150°C to obtain the solid catalyst component. The solid catalyst component suppresses the lowering of catalyst activity at the time of polymerization with time and improves the stereoregularity of an olefin polymer.

However the polymerization activity of the catalyst is not sufficiently satisfactory. An improvement for enhancing the activity is further desired.

As stated above, a catalyst system has not been obtained which is improved in all the catalyst activity at the time of olefin, stereoregularity of an olefin polymer and powder morphology. There is therefore desired an improved catalyst system with an excellent performance that can satisfy all thereof.

A propylene-ethylene random copolymer obtained by random-copolymerizing propylene and ethylene has an excellent impact resistance and transparency compared with propylene homopolymer. The copolymer also has an excellent heat-sealing property due to its relatively low melting point. Consequently it has been widely used in the field of wrapping materials using various films, and so on.

However, a propylene-ethylene random copolymer obtained by conventional art is not satisfactory because of its inferior quality and the use thereof is still limited dependently on applications.

It is known that the content of ethylene contained in a propylene-ethylene random copolymer is increased to enhance its impact resistance and heat-sealing property.

However, an increase in ethylene content improves an impact resistance and heat-sealing property but in turn the amount of by-products such as a low-molecular-weight amorphous component increases and the sticky property of a film increases. This causes a blocking phenomenon and the quality of a commercial product is degraded. In addition, the low-molecular-weight amorphous component may impair a low-temperature heat-sealing property and impact resistance.

In the case where a propylene-ethylene random copolymer is produced by slurry polymerization with propylene as a medium, copolymer particles adhere to each other and the viscosity of the polymerization system increases,

which leads to not only reduction in productivity but also serious production trouble.

Polypropylene and propylene based copolymers are generally produced by using a catalyst containing a halogenated titanium compound and organic aluminum compound. If they remain as catalyst residues in a large amount in a polymer produced, a problem arises that the color of molded articles becomes yellow with poor appearance. In particular if a large amount of chlorine atoms remain therein, a roller becomes dirty and a gum-like material occurs, thereby degrading the appearance of films.

Insofar many studies have been made to improve propylene-ethylene copolymers for the purpose of enhancing the balance of properties such as the rigidity and impact resistance. Of these studies, a study in view of a solid structure is a notable approach.

The solid structure is formed of a homopropylene part constituting a matrix of a copolymer and an ethylene-propylene copolymer part constituting a rubber-like elastomer. That is, the study is to find what polymerization factors such as an amount ratio of each component, each molecular weight of the parts and stereoregularity influence the strength properties the solid structure exhibits. In the study, a polymer is then designed based on the finding and the finding is fed back to the polymerization technique for producing the polymer.

However, at present, a further improvement of rigidity and impact resistance is desired, particularly a product with an improved impact resistance.

Therefore an object of the invention is to provide a catalyst for olefin polymerization with a high polymerization activity, enabling the formation of an olefin polymer excellent in stereoregularity and powder morphology; and a method for producing an olefin polymer.

Another object of the invention is to provide a novel catalyst for propylene-ethylene copolymerization and a method for producing a propylene-ethylene copolymer.

Another object of the invention is to provide a propylene-ethylene random copolymer with a high ethylene content but a small amount of a low-molecular-weight amorphous component.

Another object of the invention is to provide a propylene-ethylene block copolymer with well-balanced properties such as rigidity and impact resistance.

Disclosure of the Invention

Preferred aspects of the invention are as follows:

(1) A solid catalyst component for olefin polymerization obtained by reacting the following compounds (i), (ii) and (iv); or (i), (ii), (iii) and (iv):

(i) a halogen-containing titanium compound;
(ii) an alkoxy-containing magnesium compound obtained by reacting metal magnesium, an alcohol and a halogen and/or a halogen-containing compound containing at least 0.0001 gram atom of halogen atoms per mol of the metal magnesium;
(iii) a halogen-containing silicon compound; and
(iv) an electron-donating compound represented by the following general formula (I):

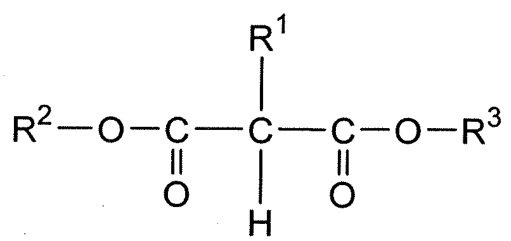

...... (I)

wherein $R^1$ represents a linear or branched alkyl group having 1 or more carbon atoms; and $R^2$ and $R^3$ independently represent a linear or branched $C_{1-20}$ alkyl group.

The use of such a solid catalyst component provides a catalyst with a high polymerization activity and an olefin polymer excellent in stereoregularity and powder form.

For example, by using the alkoxy-containing magnesium compound (ii), the morphology of an olefin polymer can be enhanced. The alkoxy-containing magnesium compound (ii) produced as described in (ii) has a substantially spherical shape without the need of classification.

Further, by using the electron-donating compound (iv), a high polymerization activity is exhibited, while maintaining a high stereoregularity. The electron-donating compound (iv) does not contain an aromatic ring, thereby reducing problems on health and safety.

The halogen-containing silicon compound (iii) may be used when necessary. Using the compound may enhance a stereoregularity and a catalyst activity at the time of polymerization, and may reduce the amount of fine powder contained in an olefin polymer.

(2) The solid catalyst component according to the aspect (1) wherein the halogen of the compound (ii) is iodine.

Iodine is convenient in handling. By using iodine, a component (ii) can be produced which has a narrow particle-diameter distribution and a spherical shape.

(3) The solid catalyst component according to the aspect (1) or (2) wherein the halogen-containing compound of the compound (ii) is magnesium chloride.

Magnesium chloride is convenient in handling. By using magnesium chloride, a component (ii) can be produced which has a narrow particle-diameter distribution and a spherical shape.

(4) The solid catalyst component according to any one of the aspects (1) to (3) wherein the halogen-containing silicon compound (iii) is silicon tetrachloride.

By using silicon tetrachloride, the shape of catalyst can be spherical and the particle-diameter distribution can be narrow.

(5) The solid catalyst component according to any one of the aspects (1) to (4) wherein the electron-donating compound (iv) is diethyl n-butylmalonate.

By using diethyl n-butylmalonate, a polymer with a higher stereoregularity can be produced with a higher activity.

(6) The solid catalyst component according to any one of the aspects (1) to (5) wherein the halogen-containing titanium compound (i) and the alkoxy-containing magnesium compound (ii) are brought into contact with each other, and thereafter the electron-donating compound (iv) is brought into contact therewith when the compounds (i), (ii) and (iv) are reacted.

In the case where a solid catalyst component for olefin polymerization is produced by reacting the compounds (i), (ii), (iii) and (iv), it is preferred that the compound (ii) is brought into contact with the compound (iii), thereafter with the compound (iv), and then with the compound (i).

(7) A catalyst for olefin polymerization comprising the following components [A] and [B]; or [A], [B] and [C]:

[A] the solid catalyst component according to any one of the aspects (1) to (6);
[B] an organic aluminum compound; and
[C] an electron-donating compound.

Such a catalyst provides a catalyst with a high polymerization activity and an olefin polymer excellent in stereoregularity and powder form.

The catalyst may contain an electron-donating compound [C] when necessary. By containing the compound, a polymer with a higher stereoregularity or controlled molecular-weight distribution can be produced.

(8) A method of producing an olefin polymer which comprises polymerizing an olefin with the catalyst according to the aspect (7).

By such a method, an olefin polymer excellent in stereoregularity and powder form can be produced with a higher polymerization activity.

[Propylene-ethylene copolymerization]

(9) A solid catalyst component for propylene-ethylene copolymerization obtained by reacting the following compounds (a), (b) and (c); or (a), (b), (c) and (d):

(a) a magnesium compound;
(b) a titanium compound;
(c) an electron-donating compound represented by the following general formula (II): and

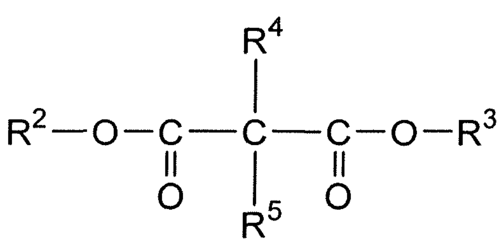

...... (II)

wherein $R^4$ represents a linear, branched or cyclic $C_{1-20}$ alkyl group; $R^5$ represents H or $C_{1-2}$ alkyl group; $R^4$ and $R^5$ may be bound together to form a ring; and $R^2$ and $R^3$ independently represent a linear or branched $C_{1-20}$ alkyl group;
(d) a silicon compound.

(10)The solid catalyst component according to the aspect (9) wherein the solid catalyst component is a solid catalyst component obtained by bringing the compounds (a) and (c); or (a), (c) and (d) in contact with the compound (b) at 120 to 150°C, and thereafter washing the contact product with an inert solvent at 100 to 150°C.

By using the solid catalyst component thus produced, a propylene-ethylene random copolymer can be produced which has a small amount of a low-molecular-weight amorphous component as a by-product.

Further by using the solid catalyst component thus produced, a propylene-ethylene block copolymer can be produced which contains a polypropylene component with a high stereoregularity.

(11)The solid catalyst component according to the aspect (9) or (10) wherein the magnesium compound (a) is an alkoxy-containing magnesium compound obtained by reacting metal magnesium, an alcohol and a halogen and/or a halogen-containing compound containing at least 0.0001 gram atom of halogen atoms per mol of the metal magnesium.

By using the alkoxy-containing magnesium compound, a copolymer can be produced which is excellent in particle form and has a uniform particle-diameter distribution.

(12) The solid catalyst component according to any one of the aspects (9) to (11) wherein $R^4$ represents a linear, branched or cyclic $C_{1-20}$ alkyl group; and $R^5$ represents H or $C_{1-2}$ alkyl group.

By using such an electron-donating compound, a propylene-ethylene random copolymer can be efficiently produced which has a small amount of a low-molecular-weight amorphous component as a by-product.

By using such an electron-donating compound, a propylene-ethylene block copolymer can be produced which has a polypropylene component with a high stereoregularity and a copolymer with a uniform composition.

(13)The solid catalyst component according to any one of the aspects (9) to (12) wherein the electron-donating compound (c) is diethyl n-butylmalonate.

By using diethyl n-butylmalonate, a less sticky propylene-ethylene random copolymer can be produced.

Further by using diethyl n-butylmalonate, a propylene-ethylene block copolymer with a narrow molecular-weight distribution can be produced.

(14)The solid catalyst component according to any one of the aspects (9) to (12) wherein the electron-donating compound (c) is dibutyl cyclobutane-1,1-dicarboxylate.

By using dibutyl cyclobutane-1,1-dicarboxylate, a less sticky propylene-ethylene random copolymer can be produced.

Further by using dibutyl cyclobutane-1,1-dicarboxylate, a propylene-ethylene block copolymer with a narrow molecular-weight distribution can be produced.

(15)The solid catalyst component according to any one of the aspects (9) to (14) which is a solid catalyst component for propylene-ethylene random copolymerization.

(16)The solid catalyst component according to any one of the aspects (9) to (14) which is a solid catalyst component for propylene-ethylene block copolymerization.

(17)A catalyst for propylene-ethylene copolymerization comprising the following compounds [A] and [B]; or [A], [B] and [C]:

[A] the solid catalyst component according to any one of the aspects (9) to (14);
[B] an organic aluminum compound; and
[C] an electron-donating compound.

(18)The catalyst according to the aspect (17) wherein the catalyst is a preliminary polymerization catalyst obtained by bringing the components [A], [B] and [C] in contact with an $\alpha$-olefin, an amount of preliminary-polymerization being from 0.1 to 100 wt%.

By using such a preliminary polymerization catalyst, a copolymer can be produced which is excellent in particle form and has a uniform particle-diameter distribution.

(19)The catalyst according to the aspect (17) or (18) which is a catalyst for propylene-ethylene random copolymerization.

(20)The catalyst according to the aspect (17) or (18) which is a catalyst for propylene-ethylene block copolymerization.

[Propylene-ethylene random copolymer]

(21)A method of producing a propylene-ethylene random copolymer which comprises random copolymerizing propylene and ethylene with the catalyst according to the aspect (19). (22)A propylene-ethylene random copolymer

obtained by the method according to the aspect (21).

By such a method, a propylene-ethylene random copolymer can be produced which is excellent in low-temperature heat-sealing property and impact resistance.

Further by using an electron-donating compound represented by the formula (II), a copolymer with a small amount of sticky component can be obtained with a high activity.

(23)The propylene-ethylene random copolymer according to the aspect (22) which has an ethylene content of from 0.1 wt% to 4 wt% and has a 0°C soluble component of 1.0 wt% or less.

The 0°C soluble component is an index of the amount of amorphous component. The 0°C soluble component degrades the mechanical properties of a polymer rather than contributes thereto. It may make polymer surface to be sticky. Thus a less amount thereof is preferred.

(24)The propylene-ethylene random copolymer according to the aspect (22) or (23) which has an ethylene content of more than 4 wt%, but 5 wt% or less; and has a 0°C soluble components of more than 1.0 wt%, but 2.0 wt% or less.

[Propylene-ethylene block copolymer]

(25)A method of producing a propylene-ethylene block copolymer which comprises the steps of:

polymerizing propylene to form a polypropylene component, and
copolymerizing ethylene and propylene to form an ethylene-propylene copolymer component,

wherein the catalyst according to the aspect (20) is used in at least one of the step of polymerizing propylene and the step of copolymerizing ethylene and propylene. (26)A propylene-ethylene block copolymer obtained by the method according to the aspect (25).

The invention provides a propylene-ethylene block copolymer wherein a polypropylene component has a high stereoregularity and an ethylene/propylene copolymer component is made of a uniform rubber-like elastomer component. The ethylene/propylene copolymer component is made of a rubber-like elastomer having uniform properties rather than relatively uniform rubber-like elastomer components, i.e., rubber-like elastomers different from each other in stiffness, with respect to ethylene content.

By using the electron-donating compound represented by the formula (II), a propylene-ethylene block copolymer excellent in both rigidity and impact resistance can be produced.

(27)The propylene-ethylene block copolymer according to the aspect (26) whose MFR is from 10 to 20 g/10 minutes.

MFR of 10 to 20 g/10 min. improves the flowability of a resin and productivity at the time of molding.

Brief Description of Drawings

Fig. 1 is a schematic drawing showing the catalyst for olefin polymerization, and a process for producing an olefin polymer according to the invention.

Fig. 2 is a schematic drawing showing a catalyst for propylene-ethylene copolymerization, and a process for producing a propylene-ethylene copolymer according to the invention.

Preferred Embodiments of the Invention

[Olefin Polymerization]

First, the catalyst for olefin polymerization and a method of producing an olefin polymer using the catalyst will be described.

1. Catalyst component

[A] Solid catalyst component

A solid catalyst component can be obtained by reacting the following compounds (i), (ii) and (iv); or (i), (ii), (iii) and (iv).

(i) Halogen-containing titanium compound

A halogen-containing titanium compound is not specially limited but a compound of the following general

formula (III) can be preferably used.

$$TiX_p(OR^6)_{4-p} \quad (III)$$

In the above general formula (III), X is a halogen atom, and a chlorine atom and a bromine atom are preferred. A chlorine atom is particularly preferred. $R^6$ is a hydrocarbon group. It may be a saturated or unsaturated group, it may be a linear, branched or cyclic group, and further, it may contain hetero atom(s) such as sulfur, nitrogen, oxygen, silicon, phosphorus, etc. Of these, a hydrocarbon group having 1 to 10 carbon atoms is preferred. Particularly, an alkyl group, an alkenyl group, a cycloalkenyl group, an aryl group and an aralkyl group are preferred, and a linear or branched alkyl group is particularly preferred. When a plurality of $OR^6$s are present, they may be identical or different. Specific examples of $R^6$ include methyl, ethyl, n-propyl, isopropyl, n-butyl, sec-butyl, isobutyl, n-pentyl, n-hexyl, n-heptyl, n-octyl, n-decyl, allyl, butenyl, cyclopentyl, cyclohexyl, cyclohexenyl, phenyl, tolyl, benzyl and phenethyl. p represents an integer of 1 to 4.

Specific examples of the halogen-containing titanium compound of the above general formula (III) include titanium tetrahalides such as titanium tetrachloride, titanium tetrabromide and titanium tetraiodide; alkoxytitanium trihalides such as methoxytitanium trichloride, ethoxytitanium trichloride, propoxytitanium trichloride, n-butoxytitanium trichloride and ethoxytitanium tribromide; dialkoxytitanium dihalides such as dimethoxytitanium dichloride, diethoxytitanium dichloride, diisopropoxytitanium dichloride, di-n-propoxytitanium dichloride and diethoxytitanium dibromide, and trialkoxytitanium monohalides such as trimethoxytitanium chloride, triethoxytitanium chloride, triisopropoxytitanium chloride, tri-n-propoxytitanium chloride and tri-n-butoxytitanium chloride. Of these, highly halogenated titanium compounds are preferred, and titanium tetrachloride is particularly preferred, in view of polymerization activity. These halogen-containing titanium compounds may be used singly or in combination of at least two members thereof.

(ii) Alkoxy-containing magnesium compound

An alkoxy-containing magnesium compound is a compound obtained by reacting metal magnesium, an alcohol and a halogen and/or a halogen-containing compound containing at least 0.0001 gram atom of halogen atoms per mol of the metal magnesium. There is no other limitation for the alkoxy-containing magnesium compound, but a compound of the following general formula (IV) is preferably used.

$$Mg(OR^7)_qR^8{}_{2-q} \quad (IV)$$

In the above general formula (IV), $R^7$ is a hydrocarbon group, and $R^8$ is a hydrocarbon group or a halogen atom. The hydrocarbon group represented by $R^7$ or $R^8$ includes an alkyl group having 1 to 12 carbon atoms, a cycloalkyl group, an aryl group and an aralkyl group. They may be identical or different. The halogen atom represented by $R^8$ includes chlorine, bromine, iodine and fluorine. q is an integer of 1 to 2.

Specific examples of the alkoxy-containing magnesium compound of the above general formula (IV) include dialkoxymagnesium and diaryloxymagnesium such as dimethoxymagnesium, diethoxymagnesium, dipropoxymagnesium, dibutoxymagnesium, dihexyloxymagnesium, dioctoxymagnesium, diphenoxymagnesium and dicyclohexyloxymagnesium; alkoxyalkylmagnesium, aryloxyalkylmagnesium, alkoxyarylmagnesium and aryloxyarylmagnesium such as ethoxyethylmagnesium, phenoxymethylmagnesium, ethoxyphenylmagnesium and cyclohexyloxyphenylmagnesium; and alkoxymagnesium halides and aryloxymagnesium halides such as butoxymagnesium chloride, cyclohexylmagnesium chloride, phenoxymagnesium chloride, ethoxymagnesium chloride, ethoxymagnesium bromide, butoxymagnesium bromide and ethoxymagnesium iodide.

Of these, dialkoxymagnesium is preferred, and diethoxymagnesium is particularly preferred, in view of polymerization activity and stereoregularity.

An alkoxy-containing magnesium compound (ii) is preferably obtained by reacting metal magnesium, an alcohol and a halogen and/or halogen-containing compound containing at least 0.0001 gram atom, per mole of the metal magnesium, of a halogen atom from the viewpoint of the powder form of an olefin polymer, the polymerization activity of the catalyst and stereoregularity.

The form of the metal magnesium is not specially limited so that metal magnesium having any particle diameter such as metal magnesium in the form of particles, ribbons, a powder or the like can be used. Further, the surface state of the metal magnesium is not specially limited, either, while metal magnesium free of a coating of magnesium hydroxide, etc., formed on the surface thereof is preferred.

The alcohol is not specially limited but preferably selected from lower alcohols having 1 to 6 carbon atoms.

When ethanol is used, there is preferably obtained a solid product that improves the catalyst greatly in the exhibition of catalyst performances. While the purity and water content of the alcohol is not limited, a coating of magnesium hydroxide is formed on the metal magnesium surface when an alcohol having a large water content is used. It is therefore preferred to use an alcohol having a water content of 1 % or less, and it is particularly preferred to use an alcohol having a water content of 2,000 ppm or less. For obtaining better morphology, further, the smaller the water content is, the more preferred such an alcohol is. Generally, the water content is desirably 200 ppm or less.

The kind of halogen is not specially limited but chlorine, bromine or iodine may preferably be used, iodine more preferably.

The kind of halogen-containing compound is not limited. Any compounds containing a halogen atom in its chemical formula may be used. The kind of a halogen atom is not specially limited but chlorine, bromine or iodine is preferred. Of halogen-containing compounds, further, a halogen-containing metal compound is particularly preferred. Specifically, the halogen-containing compound can be suitably selected from $MgCl_2$, $MgI_2$, Mg(OEt)Cl, Mg (OEt) I, $MgBr_2$, $CaCl_2$, NaCl, KBr, or the like, and of these, $MgCl_2$ is particularly preferred. The halogen-containing compound is not specially limited in state, form, particle size, etc., and a compound of any type may be used. For example, a solution of it in an alcohol solvent (e.g., ethanol) may be used.

The amount of the alcohol is not limited but preferably 2 to 100 mol per mole of the metal magnesium, particularly preferably 5 to 50 mol. When the amount of the alcohol is too large, the yield of an alkoxy-containing magnesium compound (ii) having excellent morphology may be decreased. When it is too small, stirring in a reaction vessel may not be smoothly carried out. However, the amount of the alcohol for use is not limited to the above molar ratio.

The halogen is used in such an amount that the amount of halogen per mole of the metal magnesium is at least 0.0001 gram atom, preferably at least 0.0005 gram atom, more preferably at least 0.001 gram atom. When the above amount is less than 0.0001 gram atom, the amount is substantially the same as that when using halogen as a reaction initiator. If the thus-obtained alkoxy-containing magnesium compound (ii) is used as a support for the catalyst, the catalytic activity, the morphology of an olefin polymer, and the like become defective.

The halogen-containing compound is used in such an amount that the amount of a halogen atom in the halogen-containing compound per mole of the metal magnesium is at least 0.0001 gram atom, preferably at least 0.0005 gram atom, more preferably at least 0.001 gram atom. When the above amount is less than 0.0001 gram atom, the amount is substantially the same as that when using halogen as a reaction initiator. If the thus-obtained alkoxy-containing magnesium compound (ii) is used as a support for the catalyst, the catalytic activity, the morphology of an olefin polymer, and the like become defective.

In the invention, the halogen and the halogen-containing compound may be used singly or in combination of at least two members thereof. Further, the halogen and the halogen-containing compound may be used in combination. When the halogen and the halogen-containing compound are used in combination, the amount of all of halogen atoms of the halogen and the halogen-containing compound per mole of the metal magnesium is adjusted to at least 0.0001 gram atom, preferably, to at least 0.0005 gram atom, more preferably, to at least 0.001 gram atom.

Although not specially limited, the upper limit of the amount of the halogen and/or the halogen-containing compound can be determined in such a range that the alkoxy-containing magnesium compound (ii) for use in the invention can be obtained, and generally, it is preferably limited to less than 0.06 gram atom.

In the method of the invention, the particle diameter of the alkoxy-containing magnesium compound (ii) can be controlled as required in the production thereof by properly selecting the amount of the halogen and/or the halogen-containing compound.

The production of the alkoxy-containing magnesium compound (ii) is carried out until the generation of hydrogen gas is no longer found (generally, for 1 to 30 hours). Specifically, when iodine is used as a halogen, the the alkoxy-containing magnesium compound (ii) can be produced by a method in which solid iodine is poured into a solution of metal magnesium in an alcohol and then the resultant mixture is allowed to react under heat, a method in which a solution of iodine in an alcohol is dropwise added to a solution of metal magnesium in an alcohol and then the mixture is allowed to react under heat, or a method in which a solution if iodine in an alcohol is dropwise added while a solution of metal magnesium in an alcohol is heated, to allow them to react.

Any one of these methods is preferably practiced in an inert gas atmosphere (e.g., nitrogen gas or argon gas) and optionally in the presence of an inert organic solvent (e.g., a saturated hydrocarbon such as n-hexane).

Further, when the metal magnesium, the alcohol and the halogen are poured, it is not required to pour the entire amount of each in the beginning, and each of these may be divided and poured.

In a particularly preferred embodiment, the entire amount of the alcohol is poured in the beginning and the metal magnesium is divided and poured several times. In this case, the generation of a large amount of hydrogen gas at one time can be prevented, and such is much desirable in view of safety. Further, the reaction vessel can be downsized. Moreover, it is also possible to prevent the entrainment of alcohol and halogen caused by the generation of a large amount of hydrogen gas at one time. The number of the division can be determined by taking account of the size of a reaction vessel and is not specially limited, while it is divided and poured 5 to 10 times by taking account of

complication in operation.

Further, the reaction itself may be carried out by any one of a batch method and a continuous method. As a variant, further, there may be employed a method in which a small amount of metal magnesium is poured into the alcohol poured in the entire amount thereof in the beginning, a product formed by the reaction is separated and removed into another vessel, a small amount of metal magnesium is again poured and these procedures are repeated.

When the alkoxy-containing magnesium compound (ii) is used for the preparation of the solid catalyst component [A], a dry alkoxy-containing magnesium compound (ii) may be used, or there may be used an alkoxy-containing magnesium compound (ii) that is washed with an inert solvent such as heptane, or the like after filtering. In each case, the alkoxy-containing magnesium compound (ii) can be used in a subsequent step without being subjected to milling or a classification procedure for attaining a uniform particle diameter distribution. The alkoxy-containing magnesium compound (ii) has a form close to a sphere and has a sharp particle diameter distribution. Further, the particles thereof have spherical form with small variations in sphericity.

Further, these alkoxy-containing magnesium compounds (ii) may be used singly or in combination of at least two members thereof. Further, the alkoxy-containing magnesium compound (ii) may be held on a support such as silica, alumina or polystyrene, and it may be used in the form of a mixture with a halogen, or the like.

(iii) Halogen-containing silicon compound

For the preparation of the solid catalyst component [A], a halogen-containing silicon compound (iii) is used as required.

The halogen-containing silicon compound (iii) is not specially limited but a compound of the following general formula (V) can be used.

$$Si\,(OR^9)_r X_{4-r} \qquad (V)$$

In the above general formula (V), X is a halogen atom, and of halogen atoms, a chlorine atom and a bromine atom are preferred, and a chlorine atom is particularly preferred. $R^9$ is a hydrocarbon group. It may be any one of a saturated group and an unsaturated group, it may be a linear, branched or cyclic group, and further, it may contain hetero atom(s) such as sulfur, nitrogen, oxygen, silicon, phosphorus, etc. Of these, a hydrocarbon group having 1 to 10 carbon atoms is preferred, and an alkyl group, an alkenyl group, a cycloalkenyl group, an aryl group and an aralkyl group are particularly preferred. When a plurality of $OR^9$ s are present, they may be identical or different. Specific examples of $R^9$ include methyl, ethyl, n-propyl, isopropyl, n-butyl, sec-butyl, isobutyl, n-pentyl, n-hexyl, n-heptyl, n-octyl, n-decyl, allyl, butenyl, cyclopentyl, cyclohexyl, cyclohexenyl, phenyl, tolyl, benzyl and phenethyl. r is an integer of 0 to 3.

Specific examples of the halogen-containing silicon compound of the above general formula (V) include silicon tetrachloride, methoxytrichlorosilane, dimethoxydichlorosilane, trimethoxychlorosilane, ethoxytrichlorosilane, diethoxydichlorosilane, triethoxychlorosilane, propoxytrichlorosilane, dipropoxydichlorosilane and tripropoxychlorosilane. Of these, silicon tetrachloride is particularly preferred. These halogen-containing silicon compounds may be used singly or in combination of at least two members thereof.

(iv) Electron-donating compound

Diester malonic acid represented by the following general formula (I) can be used as an electron-donating compound:

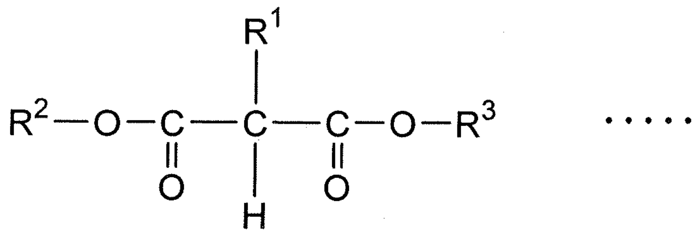
······ (I)

wherein $R^1$ represents a linear or branched alkyl group having 1 or more carbon atoms; and $R^2$ and $R^3$ independently represent a linear or branched $C_{1-20}$ alkyl group.

$R^1$ preferably has 1 to 8 carbon atoms, more preferably 2 to 4 carbon atoms.
$R^2$ and $R^3$ preferably have 2 to 8 carbon atoms, more preferably 2 to 3 carbon atoms.
Specific examples of the electron-donating compound include dimethyl esters, diethyl esters, di-n-propyl esters, diisopropyl esters, di-n-butyl esters, diisobutyl esters, di-tert-butyl esters, di-n-pentyl esters, di-n-heptyl esters, di-n-octyl esters and dineopentyl esters of methyl malonic acid, ethyl malonic acid, n-propyl malonic acid, isopropyl malonic acid, n-butyl malonic acid, isobutyl malonic acid, sec-butyl malonic acid, and t-butyl malonic acid. Of these, diethyl n-butyl malonate is preferred. These compounds may be used singly or in combination of at least two members thereof.

[B] Organic aluminum compound

Although not specially limited, the organic aluminum compound [B] for use in the invention can be preferably selected from organic aluminum compounds having an alkyl group, a halogen atom, a hydrogen atom and an alkoxy group, aluminoxane or mixtures thereof. Specific examples thereof include trialkylaluminum such as trimethylaluminum, triethylaluminum, triisopropylaluminum, triisobutylaluminum and trioctylaluminum; dialkylalminum monochlorides such as diethylaluminum monochloride, diisopropylaluminum monochloride, diisobutylaluminum monochloride and dioctylaluminum monochloride; alkylaluminum sesquihalides such as ethylaluminum sesquichloride; and linear aluminoxanes such as methylalminoxane. Of these organic aluminum compounds, trialkylaluminum having lower alkyl groups having 1 to 5 carbon atoms is preferred, and trimethylaluminum, triethylaluminum, tripropylaluminum and triisobutylaluminum are particularly preferred. These organic aluminum compounds may be used singly or in combination of at least two members thereof.

[C] Electron-donating compound

For the preparation of the catalyst for olefin polymerization in the invention, an electron-donating compound [C] is used as required. The electron-donating compound [C] can be selected from an organosilicon compound having an alkoxy group, a nitrogen-containing compound, a phosphorus-containing compound or an oxygen-containing compound. Of these, an organosilicon compound having one or more alkoxy groups is particularly preferred.
Specific examples of the organosilicon compound having one or more alkoxy groups include trimethylmethoxysilane, trimethylethoxysilane, triethylmethoxysilane, triethylethoxysilane, dimethyldimethoxysilane, dimethyldiethoxysilane, ethylisopropyldimethoxysilane, propylisopropyldimethoxysilane, diisopropyldimethoxysilane, diisobutyldimethoxysilane, isopropylisobutyldimethoxysilane, di-t-butyldimehoxysilane, t-butylmethyldimethoxysilane, t-butylethyldimethoxysilane, t-butylpropyldimethoxysilane, t-butylisopropyldimethoxysilane, t-butylbutyldimethoxysilane, t-butylisobutyldimethoxysilane, t-butyl(s-butyl)dimethoxysilane, t-butylamyldimethoxysilane, t-butylhexyldimethoxysilane, t-butylheptyldimethoxysilane, t-butyloctyldimethoxysilane, t-butylnonyldimethoxysilane, t-butyldecyldimethoxysilane, t-butyl(3,3,3-trifluromethylpropyl)dimethoxysilane, cyclohexylmethyldimethoxysilane, cyclohexylethyldimethoxysilane, cyclohexylpropyldimethoxysilane, dicyclohexyldimethoxysilane, cyclohexyl-t-butyldimethoxysilane, cyclopentylmethyldimethoxysilane, cyclopentylethyldimethoxysilane, cyclopentylpropyldimethoxysilane, cyclopentyl-t-butyldimethoxysilane, dicyclopentyldimethoxysilane, cyclopentylcyclohexyldimethoxysilane, bis(2-methylcyclopentyl) dimethoxysilane, bis(2,3-dimethylcyclopentyl)dimethoxysilane, α-naphthyl-1,1,2-trimethylpropyldimethoxysilane, n-tetradecanyl-1,1,2-trimethylpropyldimethoxysilane, 1,1,2-trimethylpropylmethyldimethoxysilane, 1,1,2-trimethylpropylethyldimethoxysilane, 1,1,2-trimethylpropylisopropyldimethoxysilane, 1,1,2-trimethylpropylcyclopentyldimethoxysilane, 1,1,2-trimethylpropylcyclohexyldimethoxysilane, 1,1,2-trimethylpropylmyristyldimethoxysilane, diphenyldimethoxysilane, diphenyldiethoxysilane, phenyltriethoxysilane, methyltrimethoxysilane, methyltriethoxysilane, ethyltrimethoxysilane, ethyltriethoxysilane, propyltrimethoxysilane, isopropyltrimethoxysilane, butyltrimethoxysilane, butyltriethoxysilane, isobutyltrimethoxysilane, t-butyltrimethoxysilane, s-butyltrimethoxysilane, amyltrimethoxysilane, isoamyltrimethoxysilane, cyclopentyltrimethoxysilane, cyclohexyltrimethoxysilane, norbornanetrimethoxysilane, indenyltrimethoxysilane, 2-methylcyclopentyltrimethoxysilane, ethyltriisopropoxysilane, methylcyclopentyl(t-butoxy)dimethoxysilane, isopropyl(t-butoxy)dimethoxysilane, t-butyl(t-butoxy)dimethoxysilane, (isobutoxy)dimethoxysilane, t-butyl(t-butoxy)dimethoxysilane, vinyltriethoxysilane, vinyltributoxysilane, chlorotriethoxysilane, γ-chloropropyltrimethoxysilane, γ-aminopropyltriethoxysilane, 1,1,2-trimethylpropyltrimethoxysilane, 1,1,2-trimethylpropylisopropoxydimethoxysilane, 1,1,2-trimethylpropyl(t-butoxy)dimethoxysilane, tetramethoxysilane, tetraethoxysilane, tetrabutoxysilane, tetraisobutoxysilane, ethyl silicate, butyl silicate, trimethylphenoxysilane, methyltriallyloxysilane, vinyltris(β-methoxyethoxy)silane, vinyltrisacetoxysilane, dimethyltetraethoxydisiloxane, cyclopentyl(t-butoxy)dimethoxysilane, t-butyl(isobutoxy) dimethoxysilane, texyltrimethoxysilane, texylisopropoxydimethoxysilane, texyl(t-butoxy)dimethoxysilane, texylmethyldimethoxysilane, texylethyldimethoxysilane, texyisopropyldimethoxysilane, texylcyclopentyldimethoxysilane, texylmyristyldimethoxysilane, texylcyclohexyldimethoxysilane, cyclohexylisobutyldimethoxysilane, isobutylisopentyldimethoxysilane, di-n-butyldimethoxysilane, and cyclopentylisobutyldimethoxysilane. These organosilicon compounds

may be used singly or in combination of at least two members thereof.

Further, the above organosilicon compound also includes a compound obtained by reacting a silicon compound having no Si-O-C bond with an organic compound having an O-C bond in advance or by reacting these compounds during the polymerization of an α-olefin. Specifically, a compound obtained by reacting silicon tetrachloride and an alcohol is included.

Specific examples of the nitrogen-containing compound include 2,6-substituted piperidines such as 2,6-diisopropylpiperidine, 2,6-diisopropyl-4-methylpiperidine and N-methyl-2,2,6,6-tetramethylpiperidine; 2,5-substituted azolidines such as 2,5-diisopropylazolidine and N-methyl-2,2,5,5-tetramethylazolidine; substituted methylenediamines such as N,N,N',N'-tetramethylmethylenediamine and N,N,N',N'-tetraethylmethylenediamine; and substituted imidazolidines such as 1,3-dibenzylimidazolidine and 1,3-dibenzyl-2-phenylimidazolidine.

Specific examples of the phosphorus-containing compound include phosphite such as triethyl phosphite, tri-n-propyl phosphite, triisopropyl phosphite, tri-n-butyl phosphite, triisobutyl phosphite, diethyl-n-butyl phosphite and diethylphenyl phosphite.

Specific examples of the oxygen-containing compound include 2,5-substituted tetrahydrofurans such as 2,2,5,5-tetramethyltetrahydrofuran and 2,2,5,5-tetraethyltetrahydrofuran; and dimethoxymethane derivatives such as 1,1-dimethoxy-2,3,4,5-tetrachlorocyclopentadiene, 9,9-dimethoxyfluorene and diphenyldimethoxymethane.

2. Method for preparing solid catalyst component [A]

As a preparation method of the solid catalyst component [A], there is employed a method in which the above halogen-containing titanium compound (i), the alkoxy-containing magnesium compound (ii), if necessary, a certain amount of the halogen-containing silicon compound (iii), and the electron-donating compound (iv) are subjected to contact-reaction. The contact order is not critical.

The compound (i) can be brought into contact and reacted with the compounds (ii), (iii) and (iv), or the compounds (ii), and (iv) and thereafter be brought into contact and reacted with these compounds again (one or more times). This method is preferred.

In the case where the [A] component is produced by reacting the compounds (i), (ii) and (iv), the halogen-containing titanium compound (i) is preferably brought into contact with the alkoxy-containing magnesium compound (ii) and then the electron-donating compound (iv).

In the case where the [A] component is produced by reacting the compounds (i), (ii), (iii) and (iv), the alkoxy-containing magnesium compound (ii) and halogen-containing silicon compound (iii) are preferably subjected to contact-reaction and then brought into contact with the electron-donating compound (iv), and finally with the halogen-containing titanium compound (i). This contact order may improve the polymerization acitivily.

These components may be contacted in the presence of an inert solvent such as a hydrocarbon, or each component may be diluted in an inert solvent such as a hydrocarbon and then brought into contact with each other. Examples of the above inert solvent include aliphatic or alicyclic hydrocarbons such as octane, decane and ethylcyclohexane, aromatic hydrocarbons such as toluene, ethylbenzene and xylene, halogenated hydrocarbons such as chlorobenzene, tetrachloroethane and chlorofluorocarbons, and mixtures thereof. Of these, aliphatic hydrocarbons and aromatic hydrocarbons are preferred, and aliphatic hydrocarbons are particularly preferably used.

The above halogen-containing titanium compound (i) is used generally in an amount, per mole of magnesium of the alkoxy-containing magnesium compound (ii), of 0.5 to 100 mol, preferably 1 to 50 mol. When this molar ratio is outside the above range, the catalytic activity may be insufficient.

Further, the electron-donating compound (iv) is used generally in an amount, per mole of magnesium of the alkoxy-containing magnesium compound (ii), of 0.01 to 10 mol, preferably 0.05 to 1.0 mol. When this molar ratio is outside the above range, the catalytic activity or stereoregularity may be insufficient.

The halogen-containing silicon compound (iii) is used such that a mole ratio (halogen/alkoxy) of halogen to alkoxy of the compound (ii) is 0 to 1.

The above contact-reaction of the compounds (i) to (iv) is carried out preferably in a temperature range of 90 to 150°C, more preferably 125 to 140°C after they are all added together. When the above contact temperature is outside the above range, the catalytic activity and the stereoregularity may not be fully improved. The contacting is carried out generally for 1 minute to 24 hours, preferably 10 minutes to 6 hours. While the pressure in the above case differs depending upon the kind of a solvent if it is used, the contact temperature, and the like, it is generally in the range of 0 to 5 MPaG, preferably 0 to 1 MPaG. During contacting procedures, it is preferred to stir the compounds in view of contact uniformity and contact efficiency. These contact conditions are also applicable to the contact-reaction which is carried out second time and thereafter with regard to the compound (i).

When a solvent is used in the procedure of contacting the halogen-containing titanium compound (i), the amount of the solvent per mole of the halogen-containing titanium compound (i) is generally 5,000 ml or less, preferably 10 to 1,000 ml. When this ratio is outside the above range, the contact uniformity and the contact efficiency may be

degraded.

Further, after the contact-reaction that is carried out first time with regard to the compounds halogen-containing titanium (i), a reaction product is generally washed with an inert solvent at a temperature of 90 to 150°C, preferably 120 to 140°C. When the washing temperature is outside the above range, the effect of improving the catalytic activity and the stereoregularity may not be fully exhibited. Examples of the above inert solvent include aliphatic hydrocarbons such as octane, decane, etc., alicyclic hydrocarbons such as methylcyclohexane, ethylcyclohexane, etc., aromatic hydrocarbons such as toluene, xylene, ethyl benzene, etc., halogenated hydrocarbons such as chlorobenzene, tetrachloroethane, chlorofluorocarbons, etc., and mixtures thereof. Of these, aliphatic hydrocarbons and aromatic hydrocarbons are preferred.

While the washing temperature after the contact-reaction that is carried out second time and thereafter with regard to the halogen-containing titanium compound (i) is not specially limited, it is preferred to carry out the washing at a temperature of 90 to 150°C, particularly preferably 120 to 140°C, in view of stereoregularity.

The washing method is not specially limited. Howerer, it is preferably a method of decantation or filtering. The amount of the inert solvent, the time period for the washing and the number of times of the washing are not specially limited. However, the washing is effected using the solvent in an amount, per mole of the magnesium compound, generally, of 100 to 100,000 ml, preferably 1,000 to 50,000 ml, generally for 1 minute to 24 hours, preferably 10 minutes to 6 hours. When the ratios are outside the above range, the washing is sometimes incomplete.

In this case, the pressure differs depending upon the kind of the solvent, the washing temperature, etc., while the washing is generally carried out under a pressure in the range of 0 to 5 MPaG, preferably 0 to 1 MPaG. During the washing procedure, it is preferred to carry out the stirring with respect to the uniformity of washing and washing efficiency. The thus-obtained solid catalyst component [A] can be stored in a dry state or in an inert solvent such as a hydrocarbon, or the like.

3. Method for producing olefin polymer

While the amount of each component for the catalyst for olefin polymerization, provided by the invention, is not specially limited, the solid catalyst component [A] is generally used in an amount corresponding to the range of 0.00005 to 1 mmol as a titanium atom per liter of a reaction volume.

The organic aluminum compound [B] is generally used in such an amount that the aluminum/titanium atomic ratio is generally in the range of 1 to 1,000, preferably 10 to 500. When the atomic ratio is outside the above range, the catalytic activity may be insufficient.

Further, when the electron-donating compound [C] is used, it is used in such an amount that [C]/[B] (molar ratio) is generally in the range of 0.001 to 5.0, preferably 0.01 to 2.0, more preferably 0.05 to 1.0. When the molar ratio is outside the above range, the catalytic activity and the stereoregularity may not be sufficiently obtained. When preliminary polymerization is carried out, however, the amount of the electron-donating compound [C] can be further decreased.

As an olefin for use in the invention, an α-olefin of the general formula (VI) is preferred.

$$R^{10}\text{-}CH{=}CH_2 \quad (VI)$$

In the above general formula (VI), $R^{10}$ is a hydrogen atom or a hydrocarbon group, the hydrocarbon group may be a saturated group or an unsaturated group, and it may be a linear, branched or cyclic group. Specifically, the olefin includes ethylene, propylene, 1-butene, 1-pentene, 1-hexene, 1-heptene, 1-octene, 1-decene, 3-methyl-1-pentene, 4-methyl-1-pentene, vinylcyclohexane, butadiene, isoprene, piperylene, and the like. These olefins may be used singly or in combination of at least two members thereof. Of the above olefins, ethylene and propylene are preferred.

In the polymerization of an olefin in the invention, the regular polymerization may be carried out after preliminary polymerization is first carried out as required in view of the polymerization activity and the stereoregularity and powder form of an olefin polymer. In this case, an olefin is preliminarily polymerized in the presence of a catalyst that is a mixture of predetermined amounts of the solid catalyst component [A], the organic aluminum compound [B] and optionally the electron-donating compound [C], generally at a temperature in the range of 1 to 100°C under a pressure of atmospheric pressure to approximately 5 MPaG, and the olefin is polymerized in a regular manner in the presence of the catalyst and the preliminary polymerization product.

The polymerization method in the above regular polymerization is not specially limited, and any one of solution polymerization, slurry polymerization, gaseous phase polymerization, bulk polymerization, and the like can be applied. Further, batch polymerization and continuous polymerization can be applied as well as two-stage polymerization or multi-stage polymerization under different conditions.

Concerning reaction conditions, the polymerization pressure is not specially limited, and in view of polymerization activity, it is determined to be in the range generally of atmospheric pressure to 8 MPaG, preferably 0.2 to 5 MPaG, and the polymerization temperature is determined to be in the range generally of 0 to 200°C, preferably 30 to 100°C. Although differing depending upon the kind of an olefin as a raw material and the polymerization temperature, the polymerization time period is generally 5 minutes to 20 hours, preferably approximately 10 minutes to 10 hours.
The molecular weight of the olefin polymer can be adjusted by adding a chain transfer agent, preferably, by adding hydrogen. Further, an inert gas such as nitrogen, or the like, can be allowed to be present. Concerning the catalyst components in the invention, the solid catalyst component [A], the organic aluminum compound [B] and the electron-donating compound [C] may be mixed to cause them to contact each other and immediately thereafter an olefin may be introduced and polymerized. Otherwise, the catalyst components may be aged for approximately 0.2 to 3 hours after the contacting and then an olefin may be introduced and polymerized. Further, the above catalyst components may be fed in the form of a suspension of these in an inert solvent or an olefin. In the invention, post treatment after the polymerization can be carried out according to a conventional method. That is, in a gaseous phase polymerization method, after polymerization, a nitrogen current or the like can be allowed to pass through a polymer powder withdrawn from a polymerizer for removing an olefin, etc., contained therein. Further, a polymer may be pelletized with an extruder as required, and in this case, a small amount of water, an alcohol, or the like can be added for completely deactivating the catalyst. In a bulk polymerization method, after polymerization, a polymer can be pelletized after a monomer is completely separated from the polymer withdrawn from a polymerizer.

[Propylene-ethylene copolymerization]

A catalyst for propylene-ethylene copolymerization and a method of producing a propylene-ethylene copolymer of the invention will be described. The propylene-ethylene copolymerization of the invention include random copolymerization and block copolymerization.
Propylene-ethylene random and block copolymers obtained by the method will also be described.

1 Catalyst component

[A] Solid catalyst component

The solid catalyst component contains titanium, magnesium and an electron-donating compound, and be produced by using the following magnesium compound (a), titanium compound (b) and electron-donating compound (c), if necessary, and silicon compound (d).

(a) Magnesium compound

A magnesium compound represented by the general formula (VII) may be used.

$$MgR^{11}R^{12} \qquad (VII)$$

In the formula (VII), $R^{11}$ and $R^{12}$ are a hydrocarbon group, an $OR^{13}$ group wherein $R^{13}$ is a hydrocarbon group, or a halogen atom. Hydrocarbon groups include $C_{1-12}$ alkyl, cycloalkyl, aryl and aralkyl. For the $OR^{13}$ group, $R^{13}$ include $C_{1-12}$ alkyl, cycloalkyl, aryl and aralkyl. Halogen atoms include chlorine, bromine, iodine and fluorine. $R^{11}$ and $R^{12}$ may be identical or different.
Examples of the magnesium compounds of formula (VII) include alkyl magnesiums and aryl magnesiums such as dimethylmagnesium, diethylmagnesium, diisopropylmagnesium, dibutylmagnesium, dihexylmagnesium, dioctylmagnesium, ethylbutylmagnesium, diphenylmagnesium, and dicyclohexylmagnesium; alkoxymagnesiums and aryloxymagnesiums such as dimethoxymagnesium, diethoxymagnesium, dipropoxymagnesium, dibutoxymagnesium, dihexyloxymagnesium, dioctoxymagnesium, diphenoxymagnesium, and dicyclohexyloxymagnesium; alkylmagnesium halides and arylmagnesium halides such as ethylmagnesium chloride, butylmagnesium chloride, hexylmagnesium chloride, isopropylmagnesium chloride, isobutylmagnesium chloride, t-butylmagnesium chloride, phenylmagnesium bromide, benzylmagnesium chloride, ethylmagnesium bromide, butylmagnesium bromide, phenylmagnesium chloride, and butylmagnesium iodide; alkoxylmagnesium halides and aryloxymagnesium halides such as butoxymagnesium chloride, cyclohexyloxymagnesium chloride, phenoxymagnesium chloride, ethoxymagnesium bromide, butoxymagnesium bromide, and ethoxymagnesium iodide; magnesium halides such as magnesium chloride, magnesium bromide, and magnesium iodide.

These magnesium compounds may be used singly or those supported on a support may be used. Supports include silica, alumina and polystylene. They may also be used in combination of two or more thereof. The mixtures of those and halogens and the like may be used.

Of these magnesium compounds, preferred are magnesium chloride and alkoxy-containing magnesium compounds of the formula (VII) wherein $R^{11}$ and/or $R^{12}$ are an $OR^{13}$ group.

Such an alkoxy-containing magnesium compound is preferably obtained by reacting metal magnesium, an alcohol and a halogen and/or a halogen-containing compound containing at least 0.0001 gram atom of halogen atoms per mol of the metal magnesium in view of the polymerization activity of a catalyst.

The kinds of alcohol, halogen and halogen-containing compound are the same as those described in the alkoxy-containing magnesium compound (ii) for a catalyst for olefin plymerization.

(b) Titanium compound

A titanium compound of the general formula (VIII) may be used.

$$TiX_s\ (OR^{14})_{4-s} \quad \text{(VIII)}$$

In the formula (VIII), X is a halogen atom, preferably a chlorine atom or a bromine atom, more preferably a chlorine atom. $R^{14}$ is a hydrocarbon group which may be saturated, unsaturated, straight, branched or cyclic; and further may have a hetero atom such as sulfur, nitrogen, oxygen, silicon and phosphorus. Preferably $R^{14}$ is a $C_{1-10}$ hydrocarbon group such as alkyl, alkenyl, cycloalkenyl, aryl or aralkyl, more preferably straight or branched alkyl. When the compound of the formula (VIII) has a plurality of $OR^{14}$ s, they may be the same or different from each other. Example of $R^{14}$ include methyl, ethyl, n-propyl, isopropyl, n-butyl, sec-butyl, isobutyl, pentyl, hexyl, heptyl, octyl, decyl, allyl, butenyl, cyclopentyl, cyclohexyl, cyclohexenyl, phenyl, tolyl, benzyl, and phenethyl. s is an integer of 0 to 4.

Examples of the titanium compound of formula (VIII) include tetraalkoxytitaniums such as tetramethoxytitanium, tetraethoxytitanium, tetra-n-propoxytitanium, tetraisopropoxytitanium, tetra-n-butoxytitanium, tetraisobutoxytitanium, tetracyclohexyloxytitanium, and tetraphenoxytitanium; and those exemplified in the hologen-containing titanium compound (i) for a catalyst for olefin plymerization. Of these, high-halogenated titanium compounds are preferred and titanium tetrachloride is particularly preferred. These titanium compounds may be used either singly or as combined.

(c) Electron-donating compound

As an electron-donating compound, a diester of malonic acid represented by the following general formula (II) may be used.

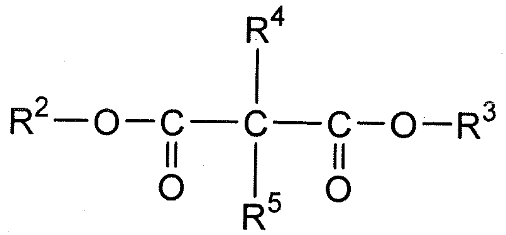

······ (II)

wherein $R^4$ represents a linear, branched or cyclic $C_{1-20}$ alkyl group; $R^5$ represents H or $C_{1-2}$ alkyl group; $R^4$ and $R^5$ may be bound together to form a ring; and $R^2$ and $R^3$ independently represent a linear or branched $C_{1-20}$ alkyl group.

$R^4$ is preferably a $C_{1-20}$ linear or branched alkyl group, more preferably $C_{1-8}$ linear or branched alkyl group, particularly preferably n-butyl group.

$R^5$ is preferably H.

$R^4$ and $R^5$ preferably form a ring.

$R^2$ and $R^3$ are preferably a $C_{2-8}$ alkyl group, more preferably ethyl group.

Specific examples of the above compound include dimethyl esters, diethyl esters, di-n-propyl esters, diisopropyl esters, di-n-butyl esters, diisobutyl esters, di-tert-butyl esters, di-n-pentyl esters, di-n-heptyl esters, di-n-octyl esters and dineopentyl esters of cyclopentane-1,1-dicarboxylic acid, cyclobutane-1,1-dicarboxylic acid, cyclopropane-1,1-dicarboxylic acid, dimethyl malonic acid, diethyl malonic acid, methyl-isopropyl malonic acid, methyl-isobutyl malonic acid, methyl malonic acid, ethyl malonic acid, n-propyl malonic acid, isopropyl malonic acid, n-butyl malonic acid, isobutyl malonic acid, cyclobutyl malonic acid, cyclopentyl malonic acid, and cyclohexyl malonic acid. These compounds may be used singly or as combined.

The above malonic esters can be synthesized by known methods, for example, the synthesis method described in "Jikken Kagaku Koza 4th", vol. 22, p. 59, Maruzen and transesterification described in "Shin Jikken Kagaku Koza", vol. 14-II, p. 931 and 1003, Maruzen.

(d) Silicon compound

As the silicon compound, a silicon compound represented by the general formula (IX) can be used.

$$Si\,(OR^{15})_t X_{4-t} \qquad (IX)$$

In the above general formula (IX), X is a halogen atom, and of halogen atoms, a chlorine atom and a bromine atom are preferred, and a chlorine atom is particularly preferred. $R^{15}$ is a hydrocarbon group. It may be any one of a saturated group and an unsaturated group, it may be a linear, branched or cyclic group, and further, it may contain hetero atom(s) such as sulfur, nitrogen, oxygen, silicon, phosphorus, etc. Of these, a hydrocarbon group having 1 to 10 carbon atoms is preferred, and an alkyl group, an alkenyl group, a cycloalkyl group, a cycloalkenyl group, an aryl group and an aralkyl group are particularly preferred. When a plurality of $OR^{15}$s are present, they may be identical or different. Specific examples of $R^{15}$ include methyl, ethyl, n-propyl, isopropyl, n-butyl, sec-butyl, isobutyl, pentyl, hexyl, heptyl, octyl, decyl, allyl, butenyl, cyclopentyl, cyclohexyl, cyclohexenyl, phenyl, tolyl, benzyl and phenethyl. t is an integer of 0 to 4.

Specific examples of the silicon compound of the above general formula (IX) include silicon tetrachloride, methoxytrichlorosilane, dimethoxydichlorosilane, trimethoxychlorosilane, ethoxytrichlorosilane, diethoxydichlorosilane, triethoxychlorosilane, propoxytrichlorosilane, dipropoxydichlorosilane and tripropoxychlorosilane. Of these, silicon tetrachloride is particularly preferred. These silicon compounds may be used singly or in combination of at least two members thereof.

The silicon compound (d), which is optionally used as desired, may be used in such an amount that the silicon compound/magnesium compound molar ratio is generally 0.01 or more, preferably 0.10 or more. If the molar ratio is less than 0.01, the catalyst activity or stereoregularity may not be sufficiently improved, and the amount of fine powder contained in a polymer produced may increase.

In the production of the solid catalyst component [A], an electron donor other than the compound (c) can be used in addition to the compound (c). Such electron donors include electron-donating compounds [C] described later, alcohols and organic acids.

[B] Organic aluminum compound

The organic aluminum compound for propylene-ethylene copolymerization is the same as the organic aluminum compound [B] described in the catalyst for olefin polymerization.

[C] Electron-donating compound

The electron-donating compound for propylene-ethylene copolymerization is the same as the electron-donating compound [C] described in the catalyst for olefin polymerization.

2. Method for preparing solid catalyst component

The solid catalyst component [A] can be prepared by bringing the above titanium compound (a), magnesium compound (b), electron donor (c) and, if necessary, silicon compound (d) into contact with each other.

Known methods include methods described in JP-A-S53-43094, JP-A-S55-135102, JP-A-S55-135103 and JP-A-S56-18606. For example, it can be prepared by the following methods; (1) the method where a magnesium compound or a complex of a magnesium compound and electron donor is crushed in the presence of an electron donor and, if desired, a crushing-aiding agent and reacted with a titanium compound; (2) the method where a liquid magnesium compound without a reducing ability is reacted with a liquid titanium compound in the presence of an electron donor, thereby precipitating a solid titanium complex; (3) the method where the product obtained in the above-mentioned (1) or (2) is reacted with a titanium compound; (4) the method where the product obtained in the above-mentioned (1) or

(2) is reacted with an electron donor and a titanium compound; and (5) the method where a magnesium compound or a complex of a magnesium compound and electron donor is crushed in the presence of an electron donor, titanium compound and, if desired, a crushing-aiding agent and then treated with a halogen or halogen compound.

The solid catalyst component [A] can also be prepared by methods other than the above methods, for example, methods described in JP-A-S56-166205, JP-A-S57-63309, JP-AS57-190004, JP-A-S57-300407 and JP-A-S58-47003.

The above titanium compound (b) is generally used in an amount of 0.5 to 100 mol per mol of magnesium of the magnesium compound (a), preferably 1 to 50 mol. The above electron donor (c) is generally used in an amount of 0.01 to 10 mole per mole of magnesium of the magnesium compound (a), preferably 0.05 to 1.0 mol. Further, silicon tetrachloride may be added as a halogenated compound.

The contact with a titanium compound is preferably repeated twice or more to be sufficiently supported on a magnesium compound acting as a support. A solid catalyst component thus obtained may be washed with an inert solvent such as hydrocarbons. The above-mentioned inert solvents may be used. The solid product may be stored in a dry state or in an inert solvent such as hydrocarbons.

The contact-reaction of the above compounds (a) to (d) is carried out at 120 to 150°C, preferably 125 to 140°C after adding all the components. The contact temperature is outside the range, the catalyst activity and stereoregularity may not be sufficiently improved. The contact-reaction is carried out generally for 1 minute to 24 hours, preferably 10 minutes to 6 hours. At this time, the pressure differs depending upon the kind of the solvent, if used, the contact temperature, etc., but the contact-reaction is generally carried out under a pressure of 0 to 5 MPa (Gauge), preferably 0 to 1 MPa (Gauge). During the contact procedure, stirring is preferred in view of the contact uniformity and contact efficiency.

The contact order is not critical. These components may be contacted in the presence of an inert solvent such as hydrocarbons, or each component may be diluted in an inert solvent such as hydrocarbons and may be brought into contact with each other. Examples of the above inert solvent include aliphatic hydrocarbons such as n-pentane, isopentane, n-hexane, n-heptane, octane and decane, aromatic hydrocarbons such as benzene, toluene and xylene, and mixtures thereof.

The contact with a titanium compound is preferably repeated twice or more to be sufficiently supported on a magnesium compound acting as a support. When a solvent is used in the contact procedure, the amount of the solvent per mol of the titanium compound is generally 5,000 ml or less, preferably 10 to 1,000 ml. When this ratio is outside the above range, the contact uniformity and the contact efficiency may be degraded.

The solid catalyst component thus obtained by the above contact-reaction is generally washed with an inert solvent at 100 to 150°C, preferably 120 to 140°C. When the washing temperature is outside the above range, the catalytic activity and the stereoregularity may not be fully improved. Examples of the above inert solvent include aliphatic hydrocarbons such as octane and decane, alicyclic hydrocarbons such as methylcyclohexane and ethylcyclohexane, aromatic hydrocarbons such as toluene and xylene, halogenated hydrocarbons such as tetrachloroethane and chlorofluorocarbons, and mixtures thereof. Of these, aliphatic hydrocarbons are preferred.

The washing method and pressure for propylene-ethylene copolymerization are the same as those described in the catalyst for olefin polymerization.

3. Method for producing propylene-ethylene copolymer

The method for producing a propylene-ethylene random copolymer according to the invention is a method for copolymerizing ethylene and propylene in the presence of the above catalyst.

The method of producing a propylene-ethylene block copolymer according to the invention comprises the steps of polymerizing propylene to form a polypropylene component and polymerizing ethylene and propylene to form an ethylene-polypropylene copolymer component. The above catalyst is used in at least one of the steps. The catalyst is preferably used in both the steps.

The amount of each component for the catalyst for olefin polymerization is not specially limited. The solid catalyst component [A] is generally used in an amount corresponding to the range of 0.00005 to 1 mmol in terms of titanium atom per liter of a reaction volume. The organic aluminum compound [B] is generally used in such an amount that the aluminum/titanium atomic ratio is generally 1 to 1,000, preferably 10 to 500. When the atomic ratio is outside the above range, the catalyst activity may be insufficient. Further, the electron-donating compound [C] such as organic silicon compounds is used in such an amount that the [C]/[B] molar ratio is generally 0.001 to 5.0, preferably 0.01 to 1.0. When the molar ratio is outside the above range, the catalyst activity may not be sufficiently obtained.

A catalyst that has been subjected to preliminary polymerization of α-olefin may be used at the time of polymerization. An α-olefin of the general formula (VI) is preferred.

$$R^{10}\text{-}CH=CH_2 \quad \text{(VI)}$$

In the above general formula (VI), $R^{10}$ is a hydrogen atom or a hydrocarbon group. The hydrocarbon group may be a saturated group or an unsaturated group, and it may be a linear, branched or cyclic group.
Specifically, the α-olefin includes ethylene, propylene, 1-butene, 1-pentene, 1-hexene, 1-heptene, 1-octene, 1-decene, 3-methyl-1-pentene, 4-methyl-1-pentene, vinylcyclohexane and the like. These olefins may be used singly or in combination of at least two members thereof.
Of the above olefins, ethylene and propylene are preferred. Dienes such as butadiene and the other various olefins can be used. In the propylene-ethylene random copolymerization of the invention, the regular polymerization may be carried out after preliminary polymerization is first carried out as required. In this case, an olefin may be preliminarily polymerized in the presence of a catalyst that is a mixture of predetermined amounts of the solid catalyst component [A], the organic aluminum compound [B] and the electron-donating compound [C], generally at a temperature of 1 to 100°C under a pressure of atmospheric pressure to approximately 5 MPa (Gauge). The polymerization is carried out for 1 minute to 10 hours, preferably 10 minutes to 5 hours.
The preliminarily polymerization amount is generally 0.1 to 1000 wt% for the solid catalyst component, preferably 1.0 to 500 wt%, more preferably 1.0 to 200 wt%. If the amount is larger than the range, a satisfactory catalyst activity may not be obtained. If the amount is too small, fine powder may increase.
Next propylene and ethylene are (random- or block-) copolymerized in the presence of the [B] and [C] components and preliminarily polymerized product.
The invention may use a small amount of α-olefin if necessary in addition to ethylene and propylene. The α-olefin includes the above-mentioned α-olefin. Dienes such as butadiene and the other various olefins may be used as required.
The polymerization method in the above regular polymerization is not specially limited, and any one of solution polymerization, slurry polymerization, gaseous phase polymerization, bulk polymerization, and the like can be applied. Further, batch polymerization and continuous polymerization can be applied as well as two-stage polymerization or multi-stage polymerization under different conditions.
A propylene-ethylene block copolymer is generally produced by either of batch polymerization or continuous polymerization as follows; a propylene homo-polymer part is firstly formed and a copolymer part is then formed. For example, the following is a production method of a coploymer by continuous polymerization. A hydrogen gas as a molecular weight adjusting agent and a catalyst are supplied to a propylene gas as a starting material in a polymerization vessel of former stage. A propylene homo-polymer part is produced while controlling a polymerization amount by a polymerization time. Next the product is moved into a polymerization vessel of last stage and an ethylene gas, a hydrogen gas and, if necessary, a catalyst are supplied to a propylene gas as a starting material therein to form a copolymer part, thereby obtaining a block copolymer.
In the production of a copolymer part according to the invention, ethylene is generally used alone. However, if necessary, there may be used the α-olefin represented by the general formula (VI) as well as dienes such as butadiene and the other various olefins.
The polymerization conditions for producing a propylene-ethylene copolymer according to the invention are the same as those for olefin polymerization described above.
The molecular weight can be adjusted by the addition of a chain transfer agent or, preferably, the addition of hydrogen. An inert gas such as nitrogen may be present. The partial pressure of ethylene is controlled by the amount of supplied ethylene such that a copolymer has a desired content of ethylene unit.
In the invention, the following ways can be selected. The catalyst components [A], [B] and [C] is mixed in certain amounts to be into contact with each other, and immediately thereafter ethylene and propylene are introduced thereto and polymerized. Otherwise, ethylene and propylene is introduced and polymerized after the contact product is aged for approximately 0.2 to 3 hours. These catalyst components may be supplied as a suspension in an inert solvent or propylene.
Post treatment after the polymerization is the same as those for olefin polymerization described above.

4. Propylene-ethylene random copolymer

The propylene-ethylene random copolymer of the invention is a polymer obtained by the above production method. It generally has an ethylene content measured by $^{13}C$-NMR of 0.1 to 10.0 wt%, preferably 0.5 to 7.0 wt%. If the content exceeds the range, the amount of a 0°C soluble part by temperature rising elution fractionation may increase with the degraded blocking properties. If it is lower than the range, the heat-seal temperature tends not to decrease.
The copolymer generally has a molecular weight distribution (Mw/Mn) measured by gel permeation chromatography of 3.5 to 5.0, preferably 3.5 to 4.5. If the molecular weight distribution is wider than the range the blocking properties may be degraded. If it is narrower than the range, the molding properties may be degraded.

The copolymer generally has a melt flow rate (MFR) of 0.01 to 1000 g/10 min, preferably 0.1 to 500 g/10 min, more preferably 1 to 100 g/10 min. MFR is measured according to JIS-K7210 under the conditions of 230°C and 2.16 Kg. If MFR is larger than the range, the impact resistance may decrease. If it is smaller, it becomes difficult to mold the copolymer.

The polymerization activity is preferably 350 kg/g-Ti or more, more preferably 500 kg/g-Ti or more, particularly preferably 700 kg/g-Ti or more.

5. Propylene-ethylene block copolymer

The propylene-ethylene block copolymer of the invention generally has a melt flow rate (MFR) of 0.1 to 500 g/10 min, preferably 0.1 to 100 g/10 min, more preferably 10 to 20 g/10 min. MFR is measured according to JIS-K7210 under the conditions of 230°C and 2.16'Kg.

If MFR is larger than the range, the impact resistance may decrease. If it is smaller, it becomes difficult to mold the copolymer.

The copolymer generally has a molecular weight distribution (Mw/Mn) measured by gel permeation chromatography of 3.5 to 5.0, preferably 3.5 to 4.5. If the molecular weight distribution is smaller, the flowability may decrease and the molding properties may degraded. If it is larger, components of low molecular weights tend to increase, thereby reducing the transparency.

The propylene-ethylene block copolymer of the invention preferably has 5 to 50 wt% of a xylene soluble component, i.e., amorphous part, at 25°C. If the amount of a xylene soluble component exceeds the range, the rigidity may decrease. If it is lower, the impact resistance tends to decrease. The ethylene content of an amorphous part is preferably 15 to 50 mol%. If it is outside the range, the dispersibility of a rubber may be reduced, thereby degrading the physical properties such as rigidity and impact resistance.

The propylene-ethylene block copolymer of the invention preferably has a flexural modulus of 800 MPa (Gauge) or more, more preferably 1000 MPa (Gauge) or more.

The copolymer preferably has an ordinary temperature Izod impact strength of 7 $kJ/m^2$ or more.

The copolymer preferably has a low temperature Izod impact strength of 4 $kJ/m^2$ or more, more preferably 6 $kJ/m^2$ or more.

EXAMPLES

The invention will be specifically explained with reference to Examples, while the present invention shall not be limited to Examples.

[Examples of olefin polymerization]

The evaluation methods of properties are shown below.

(1) Catalyst activity: A solid catalyst component produced was fully dried, exactly weighed and fully decomposed with a 3N sulfuric acid. Insoluble materials were removed by filtration. To the filtrate were added phosphoric acid as a masking agent and 3% hydrogen peroxide solution, thereby developing color. The absorption of the colored solution at 420 nm was measured by FT-IR to determine a Ti concentration. The amount of supported Ti in the solid catalyst component was calculated using the Ti concentration and the catalyst activity per gram of titanium was calculated on the basis of the amount.

(2) [η]: Measured in a tetralin solvent with a VMR-053 model automatic viscometer available from Rigo Co., LTD.

(3) [mmmm]: An olefin polymer obtained was dissolved in a 90:10 (volume ratio) mixture solvent of 1,2,4-trichlorobenzene and deuterobenzene, and isotacticity was determined on the basis of signals of methyl measured at 130°C by a proton complete decoupling method using $^{13}C$-NMR (trade name: LA-500, available from JEOL).

[mmmm] is an isotactic fraction in pentad units of a polypropylene molecule chain determined on the basis of $^{13}C$-NMR spectrum as proposed by A. Zambelli et al on page 925 of Macromolecules, Vol. 6 (1973).

Further, the method of assignment of peaks of $^{13}C$-NMR spectrum was according to the assignment proposed by A. Zambelli et al. on page 687 of Macromolecules, Vol. 8 (1975).

(4) Average particle diameter of alkoxy-containing magnesium compound (ii): A magnesium compound (ii) was suspended in a hydrocarbon, and the magnesium compound in this state was measured for particle diameters by a light transmission method. Particle diameter distribution determined by the measurement was plotted on a logarithmic normal probability paper, and a 50 % particle diameter was taken as an average particle diameter ($D_{50}$).

(5) Particle state of polyolefin powder (average particle diameter, rough powder amount and fine powder amount:

Particle diameter distribution measured with a sieve was plotted on a logarithmic normal probability paper, and a 50 % particle diameter was taken as an average particle diameter. The amount of rough powder whose diameter is 2,830 μm or more, and the amount of fine powder whose diameter is 250 μm or less were obtained.

Example 1

(1) Preparation of alkoxy-containing magnesium compound

A glass reactor having an internal volume of 6 liter and having a stirrer was fully flushed with nitrogen, and about 2,430 g of ethanol, 15 g (0.12 gram atom) of iodine and 160 g (6.6 mol) of metal magnesium were poured therein and allowed to react under heating and reflux with stirring until no hydrogen was generated from the system, to give a diethoxy magnesium compound.

(2) Preparation of solid catalyst component

A three-necked flask having an internal volume of 0.5 liter and having a stirrer was flushed with nitrogen, and 16 g of diethoxy magnesium obtained in the above (1) and 80 ml of dehydrated octane were placed therein. The mixture was heated to 40°C, and 77 ml of titanium tetrachloride was dropwise added. The mixture was heated to 90°C, and 2.8 ml of diethyl n-butyl-malonate was added. The resultant solution was stirred at an internal temperature of 125°C for 2 hours to carrying out a contacting operation. Then, the reaction product was fully washed with dehydrated octane. Further, 122 ml of titanium tetrachloride was added, and the mixture was stirred at an internal temperature of 125°C for 2 hours, thereby carrying out a contacting operation again. Then, the reaction mixture was fully washed with dehydrated octane, to give a solid catalyst component.

(3) Propylene polymerization

An autoclave made of stainless steel having an internal volume of 1 liter and having a stirrer was fully dried and flushed with nitrogen, and 400 ml of dehydrated heptane was placed therein at room temperature. Further, 2.0 mmol of triethylaluminum, 0.25 mmol of cyclohexylmethyldimethoxysilane, and 0.0025 mmol in terms of Ti atom of the solid catalyst component prepared in the above (2) were added. Hydrogen was introduced up to 0.1 MPaG. Sequentially the temperature and total pressure were raised to 80°C and 0.8 MPaG, respectively while introducing propylene. Polymerization was carried out for 1 hour.

Then, the temperature and pressure were decreased, and a reaction product was taken out and poured into 2 liter of methanol, thereby deactivating the catalyst. The product was removed by filtration and vacuum-dried to give polypropylene. It was determined for intrinsic viscosity and isotacticity, the results of which are shown in Table 1.

Comparative Example 1

(1) Preparation of solid catalyst component

A three-necked flask having an internal volume of 500 ml and having a stirrer was flushed with nitrogen, and 13.3 g of magnesium chloride (anhydride), 70 ml of decane and 65.5 ml (0.42 mol) of 2-ethyl-hexylalcohol were placed therein. The mixture was heated at 130°C for 2 hours to obtain a homogenous solution. To the solution was added 3.12g of phthalic anhydride and the mixture was further stirred at 130°C for 1 hour to dissolve phthalic anhydride in the homogenous solution.

The resultant homogenous solution was cooled to room temperature and all the solution was dropwise added to 373 ml of titanium tetrachloride maintained at -20°C. After the dropping, the temperature of the reaction system was raised to 110°C for 4 hours. Upon reaching to 110°C, 2.3 ml of diethyl n-butyl-malonate was added and then stirred for 2 hours while maintaining at 110°C.

After the 2-hour reaction was completed, a solid part was removed by filtration keeping temperature at 110°C. The solid part was suspended again in 275 ml of titanium tetrachloride, followed by heat-reaction at 110°C for 2 hours.

After the reaction is completed, a solid part was removed by filtration keeping temperature at 110°C again and washed with 110°C decane and hexane. This washing was continued until a titanium compound was not detected in a washing solution to give a solid catalyst component.

(2) Propylene polymerization

Propylene was polymerized and evaluated in the same way as in Example 1 except that the solid catalyst component obtained in the above (1) was used. Table 1 shows the results.

Example 2

(1) Preparation of solid catalyst component

A three-necked flask having an internal volume of 0.5 liter and having a stirrer was flushed with nitrogen, and 80 ml of dehydrated octane and 16 g of diethoxymagnesium prepared in Example 1 (1) were poured therein. The mixture was heated to 40°C and 2.4 ml of silicon tetrachloride was added. After stirring for 20 minutes, 1.8 ml of diethyl n-butyl-malonate was further added. The solution was heated to 65°C and 77 ml of titanium tetrachloride was then dropped. The mixture was stirred for 2 hours at an internal temperature of 125°C, thereby carrying out a contacting procedure. Thereafter, it was fully washed with dehydrated octane. Titanium tetrachloride was added in an amount of 122 ml and stirred for 2 hours at an internal temperature of 125°C, thereby carrying out a contacting procedure again. Thereafter, it was fully washed with dehydrated octane to give a solid catalyst component.

(2) Propylene polymerization

Propylene was polymerized and evaluated in the same way as in Example 1 except that the solid catalyst component obtained in the above (1) was used. Table 1 shows the results.

Example 3

(1) Preparation of solid catalyst component

A solid catalyst component was prepared in the same way as in Example 1 except that cyclohexylisobutyldimethoxysilane was used instead of cyclohexylmethyldimethoxysilane.

(2) Propylene polymerization

Propylene was polymerized and evaluated in the same way as in Example 1 except that the solid catalyst component obtained in the above (1) was used. Table 1 shows the results.

Comparative Example 2

(1) Preparation of solid catalyst component

A solid catalyst component was prepared in the same way as in Example 1 except that dibutyl cyclopentylmalonate was used instead of diethyl n-butyl-malonate.

(2) Propylene polymerization

Propylene was polymerized and evaluated in the same way as in Example 1 except that the solid catalyst component obtained in the above (1) was used. Table 1 shows the results.

Table 1

| | Catalyst activity (kg-pp/g-Ti) | Polymer properties | | Morphology | | | |
|---|---|---|---|---|---|---|---|
| | | [η] (dl/g) | [mmmm] (%) | Compound (ii) Average particle diameter (μm) | Polymer Average particle diameter (μm) | Polymer Rough powder amount (%) | Polymer Fine powder amount (%) |
| Example 1 | 278 | 0.96 | 92.9 | 59 | 1030 | 0.1 | 7.6 |
| Example 2 | 252 | 0.98 | 93.4 | 62 | 1100 | 0.3 | 3.6 |
| Example 3 | 293 | 0.98 | 94.3 | 58 | 1060 | 0.3 | 6.1 |
| Comparative example 1 | 192 | 0.95 | 93 | 25 | 260 | 0.1 | 85 |
| Comparative example 2 | 216 | 1.02 | 93.5 | 61 | 1090 | 0.3 | 8.9 |

[Examples of propylene-ethylene random copolymerization]

The evaluation methods of properties are shown below.

(1) Measurement for [η]

Measured in a tetralin solvent at 135°C with a VMR-053 model automatic viscometer available from Rigo Co.,

LTD.

(2) Measurement for Mw/Mn

Measured with the following device under the following conditions.
GPC (gel permeation chromatography) measurement device
Column: Shodex UT806L, available from SHOWA DENKO K. K.
Infrared detector: IR detector for Liquid chromatography
Infrared detection flow cell: KBr cell (light path length 1mm)

Measuring conditions

Solvent: o-dichlorobenzene
Measuring temperature: 135°C
Flow rate: 1.0 ml/min
Sample concentration: 2 mg/ml
Injected amount: 200 µm
Infrared absorption wavelength: 3.42 µm

(3) Elution curve peak temperature and 0°C soluble component amount by temperature rising elution fractionation.

Determined by temperature rising elution fractionation for polypropylene obtained by polymerization. A sample was prepared as follows: 75 mg of polymer was weighed and placed in 10 ml of o-dichlorobenzene at room temperature and dissolved with stirring for 1 hour at 135 to 150°C to prepare a sample. To a column was injected 0.5 ml of the sample solution at 135°C and then gradually cooled to 0°C at a rate of 10 °C/hr, thereby crystallizing polymer on the surface of filler in the column. The amount of polymer that was not crystallized and remained is the amount of 0°C soluble component.

(4) Measurement for ethylene content by $^{13}C$-NMR

An ethylene unit content was determined by the following method. That is, $^{13}C$-NMR measurement shown below was carried out with regard to a sample, and a triad chain fraction (mol%) of ethylene (E) and propylene (P) was calculated from seven peak-intensities in a 35 to 21 ppm [tetramethylsilane (TMS) chemical shift standard)] region in its spectrum on the basis of the following expression.

$$f_{EPE} = [K(T_{\delta\delta})/T] \times 100$$

$$f_{PPE} = [K (T_{\beta\delta}) /T] \times 100$$

$$f_{EEE} = [K (S_{\gamma\delta}) /4T+K (S_{\delta\delta}) /2T] \times 100$$

$$f_{PPP} = [K (T_{\beta\beta}) /T] \times 100$$

$$f_{PEE} = [K (S_{\beta\gamma}) /T] \times 100$$

$$f_{PEP} = [K(S_{\beta\beta})/T] \times 100,$$

in which

$$T=K(T_{\delta\delta})+K(T_{\beta\delta})+K(S_{\gamma\delta})/4T+K(S_{\delta\delta})/2+K(T_{\beta\beta})+K(S_{\beta\delta})+K(S_{\beta\beta}).$$

Here, for example, $f_{EPE}$ represents a EPE triad chain fraction (mol%) and $K(T_{\delta\delta})$ represents an integrated intensity assigned to $T_{\delta\delta}$ carbon.

An ethylene unit content (wt%) was calculated on the basis of the following expression using the above triad chain fraction.

$$\text{Ethylene unit content (wt\%)} = 28\ [3f_{EEE}+2\ (f_{PEE}+f_{EPE})\ +f_{PPE}+f_{PEP})$$
$$\times 100/\ [28\ [3f_{EEE}+2\ (f_{PEE}+f_{EPE})\ +f_{PPE}+f_{PEP}]$$
$$+42\ [3f_{PPP}+2\ (f_{PPE}+f_{PEP})\ +f_{EPE}+f_{PEE}]]$$

<$^{13}$C-NMR measurement>

A sample in an amount of 220 mg was taken into an NMR sample tube, 3 ml of 1,2,4-trichlorobenzene/deuterobenzene mixture solvent (volume ratio 90/10) was added, and then, the sample tube was capped. The mixture was homogeneously dissolved at 130°C and then subjected to $^{13}$C-NMR measurement under the following measurement conditions.

Apparatus: JNM-EX400 available from JEOL
Pulse width: 9 μS (45°)
Pulse recurrence period: 4 seconds
Spectral width: 20,000 Hz
Measurement temperature: 130°C
Number of times of integrating: 1,000 - 10,000 times

Example 4

(1) Preparation of solid catalyst component

A glass reactor having an internal volume of 6 liter and having a stirrer was fully flushed with nitrogen, and about 2,430 g of ethanol, 16 g of iodine and 160 g of metal magnesium were poured therein and allowed to react under heating and reflux with stirring until no hydrogen was generated from the system, to give a solid magnesium compound (diethoxy magnesium).

Next a three-necked flask having an internal volume of 0.5 liter and having a stirrer was flushed with nitrogen, and 16 g of diethoxy magnesium and further 80 ml of dehydrated octane were placed therein. The mixture was heated to 40°C, and 2.4 ml of silicon tetrachloride was added. After stirred for 20 minutes, 2.7 ml of diethyl n-butyl-malonate was added. The temperature of the solution was raised up to 80°C and 77 ml of titanium tetrachloride was dropwise added with a dropping funnel. The internal temperature was adjusted to 125°C to carry out a contacting operation for 2 hours.

Thereafter, the stirring was stopped to let a solid precipitated. The supernatant was removed and 100 ml of dehydrated octane was added thereto. The mixture was heated to 125°C with stirring. After maintained for 1 minute, the stirring was stopped to let a solid precipitated and the supernatant was removed. This washing operation was repeated 7 times. Further 122 ml of titanium tetrachloride was added and the internal temperature was adjusted to 125°C, thereby carrying out a contacting operation for 2 hours. Next the washing with 125°C dehydrated octane was repeated 6 times to obtain a solid catalyst component.

(2) Polymerization method

An autoclave made of stainless steel having an internal volume of 1 liter and having a stirrer was fully dried and flushed with nitrogen, 380 ml of dehydrated heptane was placed therein, and the mixture was heated to 80°C with stirring. Propylene, ethylene and hydrogen were introduced into the system while adjusting the ratio of flow amount (1/min) to 9.90:0.10:0.814, and simultaneously discharged from the system to maintain the pressure 0.4 MPa (Gauge).

After a catalyst supply tube was fully flushed with nitrogen, 20 ml of dehydrated heptane, 0.6 mmol of triethylaluminum, 0.075 mmol of dicyclopentyldimethoxysilane (DCPDMS) and 0.0015 mmol in terms of titanium atom of the above solid catalyst component were added under pressure with nitrogen. Polymerization was carried out for 1 hour while maintaining the temperature and the pressure in the system to be 80°C and 0.4 MPaG (Gauge), respectively. After the reaction was stopped by methanol, the content was removed into methanol and vacuum-dried to give propylene-ethylene copolymer. Table 2-1 shows the results.

Example 5

A random copolymer was produced in the same way as in Example 4 except that the flow amount of propylene was changed to 9.83 (1/min), the flow amount of ethylene was changed to 0.17 (1/min), and the flow amount of hydrogen was changed to 0.720 (1/min). Table 2-1 shows the results.

Example 6

A random copolymer was produced in the same way as in Example 4 except that the flow amount of propylene was changed to 9.69 (1/min), the flow amount of ethylene was changed to 0.31 (1/min), and the flow amount of hydrogen was changed to 0.810 (1/min). Table 2-1 shows the results.

Example 7

A random copolymer was produced in the same way as in Example 4 except that an electron donor used in the preparation of a solid catalyst component was changed from 2.7 ml of diethyl n-butyl-malonate to 3.1 ml of dibutyl dimethyl-malonate. Table 2-1 shows the results.

Example 8

A random copolymer was produced in the same way as in Example 5 except that the catalyst prepared in Example 7 was used. Table 2-1 shows the results.

Example 9

A random copolymer was produced in the same way as in Example 4 except that an electron donor used in the preparation of a solid catalyst component was changed from 2.7 ml of diethyl n-butyl-malonate to 3.6 ml of dibutyl cyclopentyl-malonate. Table 2-1 shows the results.

Example 10

A random copolymer was produced in the same way as in Example 5 except that the catalyst prepared in Example 9 was used. Table 2-1 shows the results.

Table 2-1

| | | | Example 8 | Example 9 | Example 10 |
|---|---|---|---|---|---|
| Solid catalyst component | Electron donor | | com. B | com. C | com. C |
| | Reaction temperature | °C | 125 | 125 | 125 |
| | Washing temperature | °C | 125 | 125 | 125 |
| Polymerization conditions | Polymerization time | minute | 60 | 60 | 60 |
| | Polymerization temperature | °C | 80 | 80 | 80 |
| | Flow amount of propylene | l /min. | 9. 83 | 9. 90 | 9. 83 |
| | Flow amount of ethylene | l /min. | 0. 17 | 0. 10 | 0. 17 |
| | Flow amount of hydrogen | l /min. | 0. 720 | 0. 814 | 0. 720 |
| | Total pressure | MPa | 0. 4 | 0. 4 | 0. 4 |
| | Catalyst | mmol | 0. 0015 | 0. 0015 | 0. 0015 |
| | TEA | mmol | 0. 6 | 0. 6 | 0. 6 |
| | Silicon compound | kind | DCP | DCP | DCP |
| | Silicon compound | mmol | 0. 075 | 0. 075 | 0. 075 |
| Polymerization results | Polymerization activity | kg/g - Ti | 790 | 500 | 770 |
| | Ethylene content | NMR | 2. 2 | 1. 2 | 2. 3 |
| | [η] | dl/g | 1. 76 | 1. 76 | 1. 76 |
| | Mw/Mn | | 4. 61 | 4. 38 | 4. 63 |
| | Amount of 0°C soluble component | wt% | 0. 89 | 0. 80 | 0. 90 |

com. A Diethyl Butyl-malonate
com. B Dibutyl dimethyl-malonate
com. C Dibutyl cyclopentyl-malonate
DCP dicyclopentyldimethoxysilane
TEA Triethylaluminum

continued

Table 2-1

| | | | Example 4 | Example 5 | Example 6 | Example 7 |
|---|---|---|---|---|---|---|
| Solid catalyst component | Electron donor | | com. A | com. A | com. A | com. B |
| | Reaction temperature | °C | 125 | 125 | 125 | 125 |
| | Washing temperature | °C | 125 | 125 | 125 | 125 |
| Polymerization conditions | Polymerization time | minute | 60 | 60 | 60 | 60 |
| | Polymerization temperature | °C | 80 | 80 | 80 | 80 |
| | Flow amount of propylene | l /min. | 9. 90 | 9. 83 | 9. 69 | 9. 90 |
| | Flow amount of ethylene | l /min. | 0. 10 | 0. 17 | 0. 31 | 0. 10 |
| | Flow amount of hydrogen | l /min. | 0. 814 | 0. 720 | 0. 810 | 0. 814 |
| | Total pressure | MPa | 0. 4 | 0. 4 | 0. 4 | 0. 4 |
| | Catalyst | mmol | 0. 0015 | 0. 0015 | 0. 0015 | 0. 0015 |
| | TEA | mmol | 0. 6 | 0. 6 | 0. 6 | 0. 6 |
| | Silicon compound | kind | DCP | DCP | DCP | DCP |
| | Silicon compound | mmol | 0. 075 | 0. 075 | 0. 075 | 0. 075 |
| Polymerization results | Polymerization activity | kg/g - Ti | 480 | 740 | 1160 | 520 |
| | Ethylene content | NMR | 1. 2 | 2. 6 | 4. 4 | 1. 1 |
| | [η] | dl/g | 1. 68 | 1. 71 | 1. 61 | 1. 69 |
| | Mw/Mn | | 4. 42 | 4. 56 | 4. 38 | 4. 38 |
| | Amount of 0°C soluble component | wt% | 0. 80 | 0. 92 | 1. 44 | 0. 79 |

com. A Diethyl Butyl-malonate
com. B Dibutyl dimethyl-malonate
com. C Dibutyl cyclopentyl-malonate
DCP dicyclopentyldimethoxysilane
TEA Triethylaluminum

Example 11

A prandom copolymer was produced in the same way as in Example 4 except that an electron donor used in the preparation of a solid catalyst component was changed from 2.7 ml of diethyl n-butyl-malonate to 3.2 ml of dibutyl cyclobutane-1,1-dicarboxylate. Table 2-2 shows the results.

Example 12

A random copolymer was produced in the same way as in Example 5 except that the catalyst prepared in Example 11 was used. Table 2-2 shows the results.

Example 13

A random copolymer was produced in the same way as in Example 5 except that a silane compound used in the polymerization was changed from dicyclopentyldimethoxysilane (DCPDMS) to cyclohexylisobutyldimethoxysilane. Table 2-2 shows the results.

Example 14

(1) Preparation of solid catalyst component

A three-necked flask having an internal volume of 500 ml and having a stirrer was flushed with nitrogen, and 13.3 g of magnesium chloride (anhydride), 70 ml of decane and 65.5 ml (0.42 mol) of 2-ethylhexylalcohol were placed therein. The mixture was heated and reacted at 130°C for 2 hours to obtain a homogenous solution. Thereafter 3.12 g of phthalic anhydride was added and further stirred at 130°C for 1 hour, thereby dissolving phthalic anhydride in the homogenous solution.

The so-obtained homogenous solution was cooled to room temperature and all the amount thereof was then dropped into 373 ml of titanium tetrachloride maintained at -20°C for 1 hour. After the dropping, the resultant was heated to 110°C for 4 hours. Upon reaching up to 110°C, 3.4 ml of diethyl n-butyl-malonate was added and thereafter stirred for 2 hours while maintaining at 110°C.

After the 2-hour-reaction, a solid part was removed by filtration keeping temperature at 110°C and suspended in 275 ml of titanium tetrachloride again. The suspension was subjected to heat-reaction at 110°C for 2 hours again.

After the reaction, a solid part was removed by filtration keeping temperature at 110°C again and washed with 110°C decane and hexane. This washing was continued until a titanium compound was not detected in a washing liquid to obtain a solid catalyst component.

(2) Polymerization method

Polymerization was carried out in the same way as in Example 4. Table 2-2 shows the results.

Example 15

(1) Preliminary polymerization

A three-necked flask having an internal volume of 1 liter and having a stirrer was flushed with nitrogen, and 48 g of the catalyst used in Example 4 was placed therein.

Further 400 ml of dehydrated heptane was added. The mixture was heated to 10°C and 2.7 ml of triethylaluminum and 2.0 ml of dicyclopentyldimethoxysilane were added thereto. A propylene gas was flown therethrough at room temperature, allowed to react for 4 hours. Thereafter a solid component was fully washed with dehydrated heptane to obtain a preliminary polymerization catalyst with a preliminary polymerization amount of 41%.

(2) Polymerization

Polymerization was carried out in the same way as in Example 4. Table 2-2 shows the results.

Comparative Example 3

A solid catalyst component was prepared in the same way as in Example 4 except that an electron donor

used in the preparation of a solid catalyst component was changed from diethyl n-butyl-malonate to diethyl diisobutyl-malonate. Next polymerization was carried out under the conditions shown in Table 2-2. Table 2-2 shows the results.

Comparative Example 4

A solid catalyst component was prepared in the same way as in Example 14 except that an electron donor used in the preparation of a solid catalyst component was changed from diethyl n-butyl-malonate to diethyl diisobutyl-malonate. Next polymerization was carried out under the conditions shown in Table 2-2. Table 2-2 shows the results.

Table 2-2

| | | | Example 11 | Example 12 | Example 13 | Example 14 |
|---|---|---|---|---|---|---|
| Solid catalyst component | Electron donor | | com. E | com. E | com. A | com. A |
| | Reaction temperature | °C | 125 | 125 | 125 | 110 |
| | Washing temperature | °C | 125 | 125 | 125 | 110 |
| Polymerization conditions | Polymerization time | minute | 60 | 60 | 60 | 60 |
| | Polymerization temperature | °C | 80 | 80 | 80 | 80 |
| | Flow amount of propylene | l /min. | 9.90 | 9.83 | 9.83 | 9.90 |
| | Flow amount of ethylene | l /min. | 0.10 | 0.17 | 0.17 | 0.10 |
| | Flow amount of hydrogen | l /min. | 0.814 | 0.720 | 0.720 | 0.814 |
| | Total pressure | MPa | 0.4 | 0.4 | 0.4 | 0.4 |
| | Catalyst | mmol | 0.0015 | 0.0015 | 0.0015 | 0.0015 |
| | TEA | mmol | 0.6 | 0.6 | 0.6 | 0.6 |
| | Silicon compound | kind | DCP | DCP | CHB | DCP |
| | Silicon compound | mmol | 0.075 | 0.075 | 0.075 | 0.075 |
| Polymerization results | Polymerization activity | kg/g - Ti | 510 | 760 | 710 | 370 |
| | Ethylene content | NMR | 1.1 | 2.3 | 2.6 | 1.2 |
| | [η] | dl/g | 1.75 | 1.72 | 1.65 | 1.70 |
| | Mw/Mn | | 4.40 | 4.58 | 4.40 | 4.47 |
| | Amount of 0°C soluble component | wt% | 0.98 | 0.90 | 0.98 | 0.81 |

com. A Diethyl Butyl-malonate
com. D Diethyl diisobutyl-malonate
com. E Dibutyl cyclobutyl-1,1-dicarboxylate
DCP Dicyclopentyldimethoxysilane
CHB Cyclohexylisobutyldimethoxysilane
TEA Triethylaluminum

Continued

Table 2-2

| | | | Example 15 | Comparative Example 3 | Comparative Example 4 |
|---|---|---|---|---|---|
| Solid catalyst component | Electron donor | | com. A | com. D | com. D |
| | Reaction temperature | °C | 125 | 125 | 110 |
| | Washing temperature | °C | 125 | 125 | 110 |
| Polymerization conditions | Polymerization time | minute | 60 | 60 | 60 |
| | Polymerization temperature | °C | 80 | 80 | 80 |
| | Flow amount of propylene | l /min. | 9.90 | 9.78 | 9.78 |
| | Flow amount of ethylene | l /min. | 0.10 | 0.22 | 0.22 |
| | Flow amount of hydrogen | l /min. | 0.814 | 0.090 | 0.090 |
| | Total pressure | MPa | 0.4 | 0.4 | 0.4 |
| | Catalyst | mmol | 0.0015 | 0.0015 | 0.0015 |
| | TEA | mmol | 0.6 | 0.6 | 0.6 |
| | Silicon compound | kind | DCP | DCP | DCP |
| | Silicon compound | mmol | 0.075 | 0.075 | 0.075 |
| Polymerization results | Polymerization activity | kg/g - Ti | 390 | 320 | 260 |
| | Ethylene content | NMR | 1.2 | 1.6 | 1.7 |
| | [η] | dl/g | 1.71 | 1.60 | 1.61 |
| | Mw/Mn | | 4.41 | 4.46 | 4.42 |
| | Amount of 0°C soluble component | wt% | 0.82 | 1.10 | 1.20 |

com. A Diethyl Butyl-malonate
com. D Diethyl diisobutyl-malonate
com. E Dibutyl cyclobutyl-1,1-dicarboxylate
DCP Dicyclopentyldimethoxysilane
CHB Cyclohexylisobutyldimethoxysilane
TEA Triethylaluminum

Tables 2-1 and 2-2 show that the polymerization activity of Examples 4 to 15 was higher that that of Comparative Examples 3 and 4.

The amount of a 0°C soluble component, which represents an amorphous polymer, generally increases with an increase in ethylene amount contained in a propylene-ethylene random copolymer. However comparing Examples 5, 8 and 10 with Comparative Examples 3 and 4, the amount of ethylene of the examples was larger but the amount of a 0°C soluble component thereof was smaller.

[Examples of propylene-ethylene block copolymerization]

The evaluation methods of properties are shown below.

(1) Measurement for MFR

Measured at 230°C under a load of 2.16 kg according to JIS K7210.

(2) Measurement for amount of component soluble in room-temperature xylene

Components soluble and insoluble in room-temperature (25°C) xylene were determined as follows.

(a) A sample in an amount of 5 ±0.05 g was weighed and placed in a 1,000 ml eggplant type flask, 1 ± 0.05 g of BHT (antioxidant) was further added, and a rotor and 700 ±10 ml of p-xylene were poured into the mixture.
(b) A condenser was attached to the eggplant type flask, and while the rotor was operated, the flask was heated in a 140 ±5°C oil bath for 120 ±30 minutes to dissolve the sample in the p-xylene.
(c) Next, the contents in the flask was poured into a 1,000 ml beaker, and then, while the solution in the beaker was stirred with a stirrer, the solution was allowed to cool (for 8 hours or longer) to room temperature (25°C). Then, a precipitate was recovered by filtering with a wire mesh.
(d) The filtrate was further filtered with a filter paper, the resultant filtrate was poured into 2,000 ±100 ml of methanol placed in a 3,000 ml beaker, and while the resultant mixture was stirred with a stirrer at room temperature (25°C), the mixture was left for 2 hours or more.
(e) Next, a precipitate was recovered by filtering with a wire mesh, air-dried for 5 hours or more and then dried with a vacuum dryer at 100 ±5°C for 240 to 270 minutes, followed by the recovery of a component soluble in 25°C xylene.
(f) The precipitate removed with the wire mesh in the above (c) was dissolved in p-xylene again according to the ways of the above (a) and (b). The solution as hot was promptly poured into 2000 ±100 mil of methanol placed in a 3,000 ml beaker and stirred with a stirrer for 2 hours and more. Thereafter the resultant mixture was left at room temperature (25°C) overnight.
(g) Next, a precipitate was recovered by filtering with a wire mesh, air-dried for 5 hours or more and then dried with a vacuum dryer at 100 ±5°C for 240 to 270 minutes, followed by the recovery of a component insoluble in 25°C xylene.

The content (W) of a component soluble in 25°C xylene is represented by W (wt%) = 100 x C/A, in which A (g) is the weight of the sample and C(g) is the weight of the soluble component recovered in the above (e). The content of an insoluble component is represented by (100 - W) wt%.

(3) Measurement for impact strength

A sample produced by injection molding was measured for a notched Izod impact strength at 23°C and -30°C according to JIS K7110.

(4) Measurement for flexural modulus

Measured for a flexural modulus according to JIS K7210.

The measurement of [η], Mw/Mn and ethylene content of component soluble in room-temperature (25°C) xylene by $^{13}C$-NMR are the same as in Examples of propylene-ethylene random copolymerization.

Example 16

(1) Preparation of solid catalyst component

A glass reactor having an internal volume of 6 liter and having a stirrer was fully flushed with nitrogen, and about 2,430 g of ethanol having a water content of 100 ppm, 16 g of iodine and 160 g of metal magnesium were poured therein and allowed to react under heating and reflux with stirring until no hydrogen was generated from the system, to give a solid magnesium compound (diethoxy magnesium).

Next a three-necked flask having an internal volume of 0.5 liter and having a stirrer was flushed with nitrogen, and 16 g of diethoxy magnesium and further 80 ml of dehydrated octane were placed therein. The mixture was heated to 40°C, and 2.4 ml of silicon tetrachloride was added. After stirred for 20 minutes, 2.7 ml of diethyl n-butyl-malonate was added. The temperature of the solution was raised up to 80°C and 77 ml of titanium tetrachloride was dropwise added with a dropping funnel. The internal temperature was adjusted to 125°C to carry out a contacting operation for 2 hours.

Thereafter, the stirring was stopped to let a solid precipitated. The supernatant was removed and 100 ml of dehydrated octane was added thereto. The mixture was heated to 125°C with stirring. After maintained for 1 minute, the stirring was stopped to let a solid precipitated and the supernatant was removed. This washing operation was repeated 7 times. Further 122 ml of titanium tetrachloride was added and the internal temperature was adjusted to 125°C, thereby carrying out a contacting operation for 2 hours. Next the washing with 125°C dehydrated octane was repeated 6 times to obtain a solid catalyst component.

(2) Polymerization method

An autoclave made of stainless steel having an internal volume of 5 liter and having a stirrer was fully dried, flushed with nitrogen and maintained at 70°C. The internal pressure was raised to 0.05 MPa (Gauge) with a propylene gas and in this state a hydrogen gas was charged therein to 0.48 MPa (Gauge). Further, the internal pressure was gradually raised to 2.8 MPa (Gauge) with a propylene gas.

Next 20 ml of heptane, 4.0 mmol of triethylaluminum, 1 mmol of dicyclopentyldimethoxysilane and 0.02 mmol in terms of Ti atom of the solid catalyst component were placed in a 60ml catalyst supply tube flushed with a nitrogen gas, and then poured into the autoclave. Propylene was introduced such that the total pressure was 2.8 MPa (Gauge) to carry out polymerization for 60 minutes.

Then, the pressure in the autoclave was decreased to ambient pressure, followed by vacuuming and deaeration. Next, ethylene gas/propylene gas were charged at a molar ratio of 4.7:5.3 up to 1 MPa (Gauge), and while the atmosphere in the autoclave was maintained at 70°C and 1 MPa (Gauge), propylene-ethylene copolymerization was carried out for 20 minutes, followed by deaeration to ambient atmosphere and the decreasing of the temperature to room temperature. The autoclave was then opened to recover polymer powder produced. To the thus-obtained block polypropylene powder were added 1,000 ppm of calcium stearate (NOF Corporation) as a neutralizing agent, 1,500 ppm of DHT-4A (available from Kyowa Chemical Industry Co., Ltd.) as a neutralizing agent, 750 ppm of P-EPQ (available from Clariant Corporation) as an antioxidant, 1,500 ppm of Irganox 1010 (available from Ciba Specialty Chemicals) as an antioxidant and 2,000 ppm of PTBBA-A1 (available from Dainippon Ink And Chemicals, Inc.) as a crystal nucleation agent. These were then fully mixed. The mixture was melted, kneaded and granulated with a 20 mm single-screw kneading extruder, to prepare pellets. A part of the pellets were subjected to structure-analysis as described above. The remaining pellets were injection-molded to prepare specimens, and the specimens were measured for properties. Table 3-1 shows the results.

Example 17

A block copolymer was produced in the same way as in Example 16 except that the copolymerization time of the second stage was changed to 40 minutes. Table 3-1 shows the results.

Example 18

A block copolymer was produced in the same way as in Example 17 except that the polymerization time of the first stage was changed to 30 minutes. Table 3-1 shows the results.

Example 19

A block copolymer was produced in the same way as in Example 16 except that the molar ratio of ethylene

to propylene was changed to 2.7:7.3 and the polymerization time was changed to 60 minutes in the second stage. Table 3-1 shows the results.

Example 20

A block copolymer was produced in the same way as in Example 16 except that an electron donor used in the preparation of a solid catalyst component was changed from 2.7 ml of diethyl n-butyl-malonate to 3.1 ml of dibutyl dimethyl-malonate. Table 3-1 shows the results.

Example 21

A block copolymer was produced in the same way as in Example 17 except that the catalyst prepared in Example 20 was used. Table 3-1 shows the results.

Example 22

A block copolymer was produced in the same way as in Example 16 except that an electron donor used in the preparation of a solid catalyst component was changed from 2.7 ml of diethyl n-butyl-malonate to 3.6 ml of dibutyl cyclopentyl-malonate. Table 3-1 shows the results.

Example 23

A block copolymer was produced in the same way as in Example 17 except that the catalyst prepared in Example 22 was used. Table 3-1 shows the results.

Table 3-1

| | | | Example 16 | Example 17 | Example 18 | Example 19 |
|---|---|---|---|---|---|---|
| Solid catalyst component | Electron donor | | com. A | com. A | com. A | com. A |
| | Reaction temperature | °C | 125 | 125 | 125 | 125 |
| | Washing temperature | °C | 125 | 125 | 125 | 125 |
| First stage | Polymerization time | minute | 60 | 60 | 30 | 60 |
| | Polymerization temperature | °C | 70 | 70 | 70 | 70 |
| | Hydrogen pressure | MPa | 0.48 | 0.48 | 0.48 | 0.48 |
| | Total pressure | MPa | 2.8 | 2.8 | 2.8 | 2.8 |
| | Catalyst | mmol | 0.02 | 0.02 | 0.02 | 0.02 |
| | TEA | mmol | 4 | 4 | 4 | 4 |
| | Silicon compound | kind | DCP | DCP | DCP | DCP |
| | Silicon compound | mmol | 1 | 1 | 1 | 1 |
| Second stage | Polymerization time | minute | 20 | 40 | 40 | 60 |
| | Polymerization temperature | °C | 70 | 70 | 70 | 70 |
| | C2 : C3 | mol ratio | 4.7 : 5.3 | 4.7 : 5.3 | 4.7 : 5.3 | 2.7 : 7.3 |
| | Total pressure | MPa | 1 | 1 | 1 | 1 |
| Polymerization results | MFR | g/10 min. | 16.5 | 15.8 | 16.0 | 15.3 |
| | [η] | dl/g | 1.52 | 1.50 | 1.50 | 1.52 |
| | Mw/Mn | | 4.38 | 4.19 | 4.43 | 4.33 |
| | Amorphous part | wt% | 17.6 | 21.8 | 32.5 | 20.8 |
| | Ethylene content | mol% | 40.2 | 42.0 | 40.5 | 25.1 |
| | Flexural modulus | MPa | 1360 | 1100 | 870 | 1100 |
| | Room temperature Izod | $kJ/m^2$ | 7.3 | 14.6 | 66.5 | 21.5 |
| | Low temperature Izod | $kJ/m^2$ | 4.2 | 6.7 | 20.6 | 6.6 |

com. A Diethyl Butyl-malonate
com. B Dibutyl dimethyl-malonate
com. C Dibutyl cyclopentyl-malonate
DCP dicyclopentyldimethoxysilane
TEA Triethyl Aluminum

Continued

Table 3-1

| | | | Example 20 | Example 21 | Example 22 | Example 23 |
|---|---|---|---|---|---|---|
| Solid catalyst component | Electron donor | | com. B | com. B | com. C | com. C |
| | Reaction temperature | °C | 125 | 125 | 125 | 125 |
| | Washing temperature | °C | 125 | 125 | 125 | 125 |
| First stage | Polymerization time | minute | 60 | 60 | 60 | 60 |
| | Polymerization temperature | °C | 70 | 70 | 70 | 70 |
| | Hydrogen pressure | MPa | 0.48 | 0.48 | 0.48 | 0.48 |
| | Total pressure | MPa | 2.8 | 2.8 | 2.8 | 2.8 |
| | Catalyst | mmol | 0.02 | 0.02 | 0.02 | 0.02 |
| | TEA | mmol | 4 | 4 | 4 | 4 |
| | Silicon compound | kind | DCP | DCP | DCP | DCP |
| | Silicon compound | mmol | 1 | 1 | 1 | 1 |
| Second stage | Polymerization time | minute | 20 | 40 | 20 | 40 |
| | Polymerization temperature | °C | 70 | 70 | 70 | 70 |
| | C2 : C3 | mol ratio | 4.7 : 5.3 | 4.7 : 5.3 | 4.7 : 5.3 | 4.7 : 5.3 |
| | Total pressure | MPa | 1 | 1 | 1 | 1 |
| Polymerization results | MFR | g/10 min. | 16.2 | 14.8 | 16.0 | 15.3 |
| | [η] | dl/g | 1.49 | 1.50 | 1.52 | 1.50 |
| | Mw/Mn | | 4.47 | 4.56 | 4.37 | 4.26 |
| | Amorphous part | wt% | 18.0 | 20.9 | 17.8 | 20.8 |
| | Ethylene content | mol% | 41.5 | 40.9 | 41.7 | 42.0 |
| | Flexural modulus | MPa | 1330 | 1090 | 1400 | 1080 |
| | Room temperature Izod | $kJ/m^2$ | 7.6 | 15.2 | 7.3 | 14.8 |
| | Low temperature Izod | $kJ/m^2$ | 4.4 | 6.5 | 4.4 | 6.3 |

com. A Diethyl Butyl-malonate
com. B Dibutyl dimethyl-malonate
com. C Dibutyl cyclopentyl-malonate
DCP dicyclopentyldimethoxysilane
TEA Triethyl Aluminum

Example 24

A block copolymer was produced in the same way as in Example 16 except that an electron donor used in the preparation of a solid catalyst component was changed from 2.7 ml of diethyl n-butyl-malonate to 3.2 ml of dibutyl cyclobutane-1,1-dicarboxylate. Table 3-2 shows the results.

Example 25

A block copolymer was produced in the same way as in Example 17 except that the catalyst prepared in Example 24 was used. Table 3-2 shows the results.

Example 26

A block copolymer was produced in the same way as in Example 16 except that a silane compound used in the polymerization was changed from dicyclopentyldimethoxysilane (DCPDMS) to cyclohexylisobutyldimethoxysilane. Table 3-2 shows the results.

Example 27

(1) Preparation of solid catalyst component

A three-necked flask having an internal volume of 500 ml and having a stirrer was flushed with nitrogen, and 13.3 g of magnesium chloride (anhydride), 70 ml of decane and 65.5 ml (0.42 mol) of 2-ethylhexylalcohol were placed therein. The mixture was heated at 130°C for 2 hours to obtain a homogenous solution. Thereafter 3.12 g of phthalic anhydride was added and further stirred at 130°C for 1 hour, thereby dissolving phthalic anhydride in the homogenous solution.

The so-obtained homogenous solution was cooled to room temperature and all the amount thereof was then dropped into 373 ml of titanium tetrachloride maintained at -20°C for 1 hour. After the dropping, the resultant was heated to 110°C for 4 hours. Upon reaching up to 110°C, 3.4 ml of diethyl n-butyl-malonate was added and thereafter stirred for 2 hours while maintaining at 110°C.

After the 2-hour-reaction, a solid part was removed by filtration keeping temperature at 110°C and suspended in 275 ml of titanium tetrachloride again. The suspension was subjected to heat-reaction at 110°C for 2 hours again.

After the reaction, a solid part was removed by filtration keeping temperature at 110°C again and washed with 110°C decane and hexane. This washing was continued until a titanium compound was not detected in a washing liquid to obtain a solid catalyst component.

(2) Polymerization method

Polymerization was carried out in the same way as in Example 17. Table 3-2 shows the results.

Example 28

(1) Preliminary polymerization

A three-necked flask having an internal volume of 1 liter and having a stirrer was flushed with nitrogen, and 48 g of the catalyst used in Example 16 was placed therein.

Further 400 ml of dehydrated heptane was added. The mixture was cooled to 10°C and 2.7 ml of triethylaluminum and 2.0 ml of dicyclopentyldimethoxysilane were added thereto. A propylene gas was flown therethrough at room temperature, allowed to react for 4 hours. Thereafter a solid component was fully washed with dehydrated heptane to obtain a preliminary polymerization catalyst with a preliminary polymerization amount of 40%.

(2) Polymerization

Polymerization was carried out in the same way as in Example 16. Table 3-2 shows the results.

Comparative Example 5

A block copolymer was produced in the same way as in Example 17 except that an electron donor used in

the preparation of a solid catalyst component was changed from diethyl n-butyl-malonate to diethyl diisobutyl-malonate and the molar ratio of ethylene to propylene was changed to 5.0:5.0 in the second stage. Table 3-2 shows the results.

Comparative Example 6

A block copolymer was produced in the same way as in Example 27 except that an electron donor used in the preparation of a solid catalyst component was changed from diethyl n-butyl-malonate to diethyl diisobutyl-malonate and the molar ratio of ethylene to propylene was changed to 5.0:5.0 in the second stage. Table 3-2 shows the results.

Table 3-2

| | | | Example 24 | Example 25 | Example 26 | Example 27 |
|---|---|---|---|---|---|---|
| Solid catalyst component | Electron donor | | com. E | com. E | com. A | com. A |
| | Reaction temperature | °C | 125 | 125 | 125 | 110 |
| | Washing temperature | °C | 125 | 125 | 125 | 110 |
| First stage | Polymerization time | minute | 60 | 60 | 60 | 60 |
| | Polymerization temperature | °C | 70 | 70 | 70 | 70 |
| | Hydrogen pressure | MPa | 0.48 | 0.48 | 0.48 | 0.48 |
| | Total pressure | MPa | 2.8 | 2.8 | 2.8 | 2.8 |
| | Catalyst | mmol | 0.02 | 0.02 | 0.02 | 0.02 |
| | TEA | mmol | 4 | 4 | 4 | 4 |
| | Silicon compound | kind | DCP | DCP | CHB | DCP |
| | Silicon compound | mmol | 1 | 1 | 1 | 1 |
| Second stage | Polymerization time | miute | 20 | 40 | 20 | 40 |
| | Polymerization temperature | °C | 70 | 70 | 70 | 70 |
| | C2 : C3 | mol ratio | 4.7 : 5.3 | 4.7 : 5.3 | 4.7 : 5.3 | 4.7 : 5.3 |
| | Total pressure | MPa | 1 | 1 | 1 | 1 |
| Polymerization results | MFR | g/10 min. | 16.0 | 15.3 | 17.0 | 16.0 |
| | [η] | dl/g | 1.51 | 1.50 | 1.42 | 1.45 |
| | Mw/Mn | | 4.35 | 4.25 | 4.27 | 4.48 |
| | Amorphous part | wt% | 17.6 | 20.6 | 17.5 | 20.9 |
| | Ethylene content | mol% | 41.8 | 42.0 | 40.0 | 41.5 |
| | Flexural modulus | MPa | 1300 | 1070 | 1300 | 1090 |
| | Room temperature Izod | $kJ/m^2$ | 7.3 | 14.7 | 7.2 | 14.4 |
| | Low temperature Izod | $kJ/m^2$ | 4.4 | 6.3 | 4.2 | 6.5 |

com. A Diethyl Butyl-malonate
com. D Diethyl diisobutyl-malonate
com. E Dibutyl cyclobutyl-1,1-dicarboxylate
DCP Dicyclopentyldimethoxysilane
CHB Cyclohexylisobutyldimethoxysilane
TEA Triethyl Aluminum

Continued

Table 3-2

| | | | Example 28 | Comparative Example 5 | Comparative Example 6 |
|---|---|---|---|---|---|
| Solid catalyst component | Electron donor | | com. A | com. D | com. D |
| | Reaction temperature | °C | 125 | 125 | 110 |
| | Washing temperature | °C | 125 | 125 | 110 |
| First stage | Polymerization time | minute | 60 | 60 | 60 |
| | Polymerization temperature | °C | 70 | 70 | 70 |
| | Hydrogen pressure | MPa | 0.48 | 0.48 | 0.48 |
| | Total pressure | MPa | 2.8 | 2.8 | 2.8 |
| | Catalyst | mmol | 0.02 | 0.02 | 0.02 |
| | TEA | mmol | 4 | 4 | 4 |
| | Silicon compound | kind | DCP | DCP | DCP |
| | Silicon compound | mmol | 1 | 1 | 1 |
| Second stage | Polymerization time | minute | 20 | 40 | 40 |
| | Polymerization temperature | °C | 70 | 70 | 70 |
| | C2 : C3 | mol ratio | 4.7 : 5.3 | 5.0 : 5.0 | 5.0 : 5.0 |
| | Total pressure | MPa | 1 | 1 | 1 |
| Polymerization results | MFR | g/10 min. | 16.1 | 25.4 | 24.7 |
| | [η] | dl/g | 1.51 | 1.18 | 1.19 |
| | Mw/Mn | | 4.46 | 4.24 | 4.28 |
| | Amorphous part | wt% | 17.7 | 20.5 | 21.0 |
| | Ethylene content | mol% | 40.7 | 40.5 | 41.2 |
| | Flexural modulus | MPa | 1350 | 980 | 990 |
| | Room temperature Izod | $kJ/m^2$ | 7.4 | 6.7 | 6.5 |
| | Low temperature Izod | $kJ/m^2$ | 4.3 | 5.7 | 5.8 |

com. A Diethyl Butyl-malonate
com. D Dietyl diisobutyl-malonate
com. E Dibutyl cyclobutyl-1,1-dicarboxylate
DCP Dicyclopentyldimethoxysilane
CHB Cyclohexylisobutyldimethoxysilane
TEA Triethyl Aluminum

Industrial Utility

The invention provides a catalyst for olefin polymerization with a high polymerization activity, enabling the formation of an olefin polymer excellent in stereoregularity and powder morphology; and a method for producing an olefin polymer.

The invention provides a novel catalyst for propylene-ethylene copolymerization and a method for producing a propylene-ethylene copolymer.

The invention provides a propylene-ethylene random copolymer with a high ethylene content but a small amount of a low-molecular-weight amorphous component.

The invention provides a propylene-ethylene block copolymer with well-balanced properties such as rigidity and impact resistance.

## Claims

1. A solid catalyst component for olefin polymerization obtained by reacting the following compounds (i), (ii) and (iv); or (i), (ii), (iii) and (iv):

   (i) a halogen-containing titanium compound;
   (ii) an alkoxy-containing magnesium compound obtained by reacting metal magnesium, an alcohol and a halogen and/or a halogen-containing compound containing at least 0.0001 gram atom of halogen atoms per mol of the metal magnesium;
   (iii) a halogen-containing silicon compound; and
   (iv) an electron-donating compound represented by the following general formula (I):

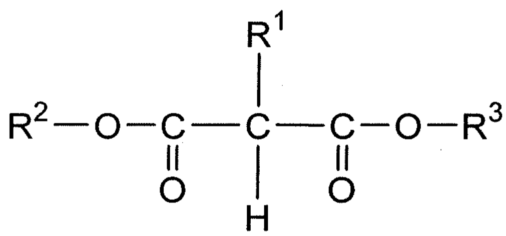

······ (I)

   wherein $R^1$ represents a linear or branched alkyl group having 1 or more carbon atoms; and $R^2$ and $R^3$ independently represent a linear or branched $C_{1-20}$ alkyl group.

2. The solid catalyst component according to claim 1 wherein the halogen of the compound (ii) is iodine.

3. The solid catalyst component according to claim 1 wherein the halogen-containing compound of the compound (ii) is magnesium chloride.

4. The solid catalyst component according to claim 1 wherein the halogen-containing silicon compound (iii) is carbon tetrachloride.

5. The solid catalyst component according to claim 1 wherein the electron-donating compound (iv) is diethyl n-butylmalonate.

6. The solid catalyst component according to claim 1 wherein the halogen-containing titanium compound (i) and the alkoxy-containing magnesium compound (ii) are brought into contact with each other, and thereafter the electron-donating compound (iv) is brought into contact therewith when the compounds (i), (ii) and (iv) are reacted.

7. A catalyst for olefin polymerization comprising the following components [A] and [B]; or [A], [B] and [C]:

   [A] the solid catalyst component according to claim 1;
   [B] an organic aluminum compound; and

[C] an electron-donating compound.

**8.** A method of producing an olefin polymer which comprises polymerizing an olefin with the catalyst according to claim 7.

**9.** A solid catalyst component for propylene-ethylene copolymerization obtained by reacting the following compounds (a), (b) and (c); or (a), (b), (c) and (d):

(a) a magnesium compound;
(b) a titanium compound;
(c) an electron-donating compound represented by the following general formula (II): and

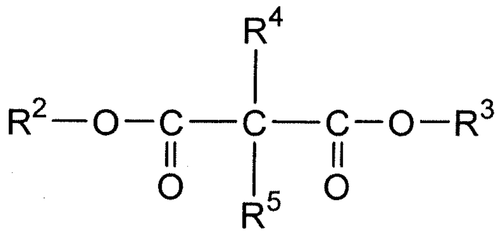

...... (II)

wherein $R^4$ represents a linear, branched or cyclic $C_{1-20}$ alkyl group; $R^5$ represents H or $C_{1-2}$ alkyl group; $R^4$ and $R^5$ may be bound together to form a ring; and $R^2$ and $R^3$ independently represent a linear or branched $C_{1-20}$ alkyl group;
(d) a silicon compound.

**10.** The solid catalyst component for propylene-ethylene copolymerization according to claim 9 wherein the solid catalyst component is a solid catalyst component obtained by bringing the compounds (a) and (c); or (a), (c) and (d) in contact with the compound (b) at 120 to 150°C, and thereafter washing the contact product with an inert solvent at 100 to 150°C.

**11.** The solid catalyst component for propylene-ethylene copolymerization according to claim 9 wherein the magnesium compound (a) is an alkoxy-containing magnesium compound obtained by reacting metal magnesium, an alcohol and a halogen and/or a halogen-containing compound containing at least 0.0001 gram atom of halogen atoms per mol of the metal magnesium.

**12.** The solid catalyst component for propylene-ethylene copolymerization according to claim 9 wherein $R^4$ represents a linear, branched or cyclic $C_{1-20}$ alkyl group; and $R^5$ represents H or $C_{1-2}$ alkyl group.

**13.** The solid catalyst component for propylene-ethylene copolymerization according to claim 9 wherein the electron-donating compound (c) is diethyl n-butylmalonate.

**14.** The solid catalyst component for propylene-ethylene copolymerization according to claim 9 wherein the electron-donating compound (c) is dibutyl cyclobutane-1,1-dicarboxylate.

**15.** A catalyst for propylene-ethylene copolymerization comprising the following compounds [A] and [B]; or [A], [B] and [C]:

[A] the solid catalyst component according to claim 9;
[B] an organic aluminum compound; and
[C] an electron-donating compound.

**16.** The catalyst for propylene-ethylene copolymerization according to claim 15 wherein the catalyst is a preliminary polymerization catalyst obtained by bringing the components [A], [B] and [C] in contact with an α-olefin, an amount of preliminary-polymerization being from 0.1 to 100 wt%.

**17.** A method of producing a propylene-ethylene random copolymer which comprises random copolymerizing propylene and ethylene with the catalyst according to claim 16.

**18.** A propylene-ethylene random copolymer obtained by the method according to claim 17.

**19.** The propylene-ethylene random copolymer according to claim 18 which has an ethylene content of from 0.1 wt% to 4 wt% and has a 0°C soluble component of 1.0 wt% or less.

**20.** The propylene-ethylene random copolymer according to claim 18 which has an ethylene content of more than 4 wt%, but 5 wt% or less; and has a 0°C soluble component of more than 1.0 wt%, but 2.0 wt% or less.

**21.** A method of producing a propylene-ethylene block copolymer which comprises the steps of:

polymerizing propylene to form a polypropylene component, and
copolymerizing ethylene and propylene to form an ethylene-propylene copolymer component,

wherein the catalyst according to claim 15 is used in at least one of the steps.

**22.** A propylene-ethylene block copolymer obtained by the method according to claim 21.

**23.** The propylene-ethylene block copolymer according to claim 22 whose MFR is from 10 to 20 g/10 minutes.

Fig. 1

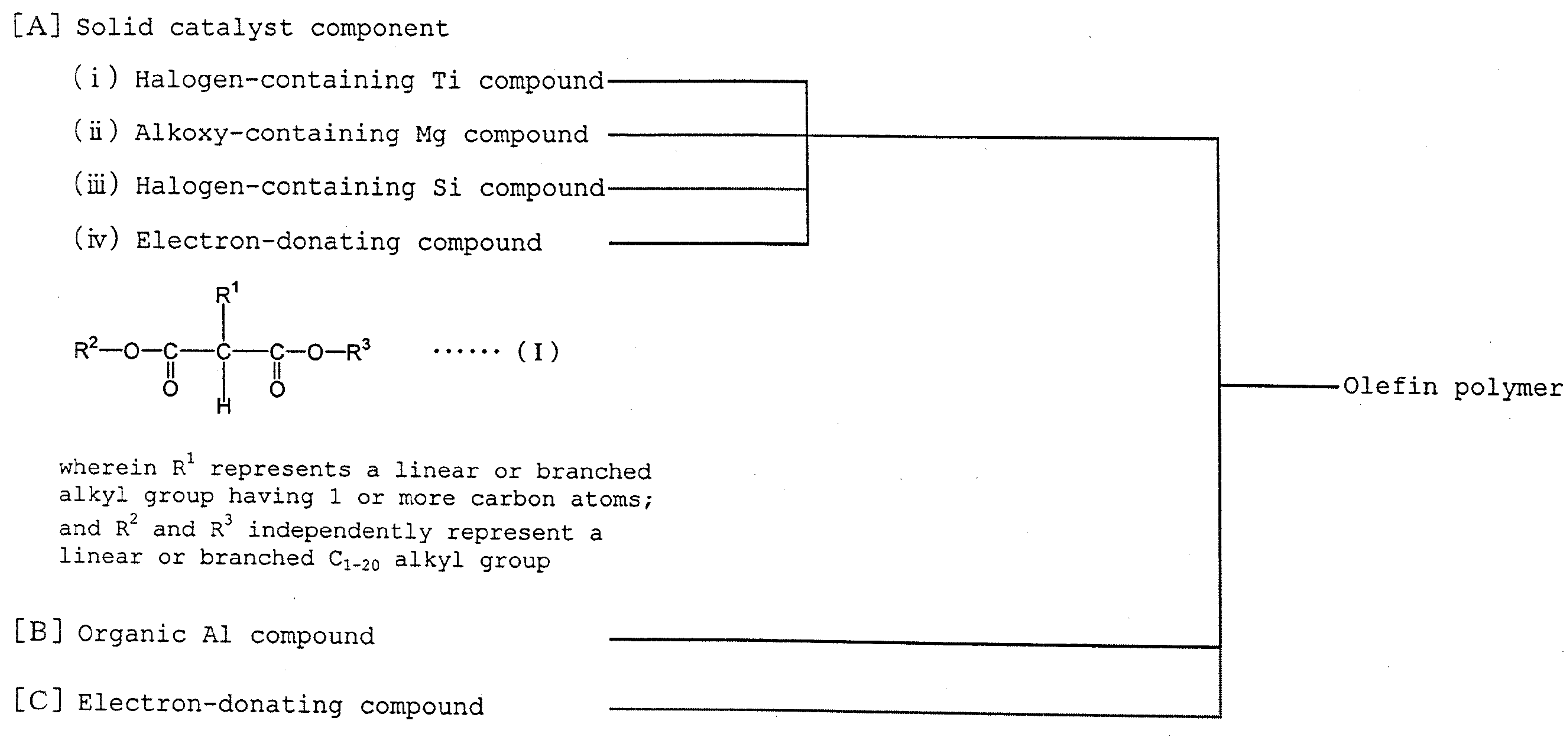
[A] Solid catalyst component
(i) Halogen-containing Ti compound
(ii) Alkoxy-containing Mg compound
(iii) Halogen-containing Si compound
(iv) Electron-donating compound
...... (I)
wherein $R^1$ represents a linear or branched alkyl group having 1 or more carbon atoms; and $R^2$ and $R^3$ independently represent a linear or branched $C_{1-20}$ alkyl group
[B] Organic Al compound
[C] Electron-donating compound
Olefin polymer

Fig. 2

[A] Solid catalyst component

(a) Mg compound

(b) Ti compound

(c) Electron-donating compound
(Diester of malonic acid)

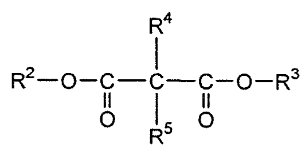

...... (II)

wherein $R^4$ represents a linear, branched or cyclic $C_{1-20}$ alkyl group; $R^5$ represents H or $C_{1-2}$ alkyl group; $R^4$ and $R^5$ may be bound together to form a cycle; and $R^2$ and $R^3$ independently represent a linear or branched $C_{1-20}$ alkyl group

(d) Silicon compound

[B] Organic Al compound

[C] Electron-donating compound

Propylene-ethylene copolymer

## INTERNATIONAL SEARCH REPORT

International application No. PCT/JP03/00524

**A. CLASSIFICATION OF SUBJECT MATTER**

Int.Cl$^7$ C08F4/658, C08F10/00, C08F297/08

According to International Patent Classification (IPC) or to both national classification and IPC

**B. FIELDS SEARCHED**

Minimum documentation searched (classification system followed by classification symbols)

Int.Cl$^7$ C08F4/60-4/70

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 58-83016 A (Mitsui Petrochemical Industries, Ltd.), 18 May, 1983 (18.05.83), Claims; page 5, upper right column, line 15 & EP 86300 A1 & KR 8602050 B1 & US 4547552 A | 9,10,12,13, 15-23 |
| X | JP 63-27517 A (Mitsui Petrochemical Industries, Ltd.), 05 February, 1988 (05.02.88), Claims; page 4, lower left column, lines 4 to 5 & CN 1034371 A & EP 276323 A1 & KR 9201355 B1 & US 5055528 A & WO 88/005999 A1 | 9,10,12,13, 15-23 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>06 March, 2003 (06.03.03) | Date of mailing of the international search report<br>18 March, 2003 (18.03.03) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/00524

C (Continuation). DOCUMENTS CONSIDERED TO BE RELEVANT

| Category* | Citation of document, with indication, where appropriate, of the relevant passages | Relevant to claim No. |
|---|---|---|
| X | JP 11-322871 A (Mitsui Chemicals, Ltd.),<br>26 November, 1999 (26.11.99),<br>Claims; page 4, right column, lines 42 to 43<br>(Family: none) | 9,10,14-23 |
| A | WO 91/09887 A1 (Idemitsu Petrochemical Co., Ltd.),<br>11 July, 1991 (11.07.91),<br>Claims<br>& EP 461268 A1 & JP 4-130107 A<br>& KR 9707238 B1 & TW 198727 A | 1-23 |
| A | WO 92/22592 A1 (Idemitsu Petrochemical Co., Ltd.),<br>23 December, 1992 (23.12.92),<br>Claims<br>& EP 544006 A1 & JP 4-368391 A<br>& JP 4-370104 A & KR 139218 B1 | 1-23 |
| A | JP 6-122716 A (Idemitsu Petrochemical Co., Ltd.),<br>06 May, 1994 (06.05.94),<br>Claims; Par. Nos. [0010] to [0017]<br>(Family: none) | 1-23 |

Form PCT/ISA/210 (continuation of second sheet) (July 1998)

## INTERNATIONAL SEARCH REPORT

International application No.
PCT/JP03/00524

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

This application has the following two groups of inventions.
1) Claims 1 to 8.
2) Claims 9 to 23.
The matter common to the above groups 1) and 2) resides in being a solid catalyst component for polymerizing olefins which is obtained by reacting magnesium, titanium and an alkyl-substituted malonic acid diester. However, such a solid catalyst component is not novel because of having been reported in, for example, JP 58-83016 A.
Such being the case, this common matter is not considered as a "special technical feature" and thus no technical relevancy can be found out between the groups 1) and 2) in the meaning as specified in PCT Rule 13.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.
☐ No protest accompanied the payment of additional search fees.

Form PCT/ISA/210 (continuation of first sheet (1)) (July 1998)